(19) Europäisches Patentamt
European Patent Office
Office européen des brevets

(11) EP 2 132 241 B1

(12) FASCICULE DE BREVET EUROPEEN

(45) Date de publication et mention de la délivrance du brevet:
**31.10.2018 Bulletin 2018/44**

(21) Numéro de dépôt: **08735769.5**

(22) Date de dépôt: **03.04.2008**

(51) Int Cl.:
***C08F 220/38*** (2006.01) ***C08F 220/60*** (2006.01)

(86) Numéro de dépôt international:
**PCT/EP2008/054024**

(87) Numéro de publication internationale:
**WO 2008/125512 (23.10.2008 Gazette 2008/43)**

# (54) COPOLYMÈRE COMPRENANT DES UNITÉS BÉTAÏNIQUES ET DES UNITÉS HYDROPHOBES ET/OU AMPHIPHILES, PROCÉDÉ DE PRÉPARATION ET UTILISATIONS.

COPOLYMER MIT BETAINISCHEN UND WASSERABWEISENDEN UND/ODER AMPHIPHILEN EINHEITEN, VERFAHREN ZUR HERSTELLUNG UND VERWENDUNG

COPOLYMER INCLUDING BETAININC UNITS AND HYDROPHOBIC AND/OR AMPHIPHILE UNITS, METHOD FOR PREPARING SAME AND USES THEREOF

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.04.2007 FR 0702497**

(43) Date de publication de la demande:
**16.12.2009 Bulletin 2009/51**

(73) Titulaire: **Rhodia Opérations**
**75009 Paris (FR)**

(72) Inventeurs:
- **MONIN, David**
  **F-75014 Paris (FR)**
- **LABEAU, Marie-Pierre**
  **Burlington, New Jersey 08016 (US)**
- **VUONG, Chi-Thanh**
  **F-77185 Lognes (FR)**
- **CADIX, Arnaud**
  **F-93400 Saint-ouen (FR)**
- **BENDEJACQ, Denis**
  **F-75005 Paris (FR)**

(74) Mandataire: **Cordier, Pascal Christian et al**
**Rhodia Operations**
**Direction de la Propriété Industrielle**
**40, rue de la Haie Coq**
**93306 Aubervilliers (FR)**

(56) Documents cités:
**EP-A- 0 370 338 WO-A-2005/070979**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a pour objet un copolymère présentant des unités bétaïniques et des unités hydrophobes et/ou amphiphiles. La présente invention concerne également un procédé de préparation d'un copolymère présentant des unités bétaïniques et des unités hydrophobes et/ou amphiphiles, par polymérisation micellaire contrôlée. La présente invention concerne également des utilisations du copolymère. Le copolymère permet notamment d'augmenter la viscosité de compositions aqueuses salines.

L'industrie utilise de nombreux agents de modification de la rhéologie, notamment des agents épaississants, dans des compositions variées. Ces agents sont généralement choisis de manière à pouvoir épaissir une composition donnée, et à conférer à ladite composition un comportement rhéologique particulier, par exemple un certain seuil, une viscoélasticité, une thixotropie, un comportement rhéofluidifiant, un comportement thermoépaississant, un comportement Newtonien, un comportement non-Newtonien etc...

Parmi les agents épaississants, on utilise fréquemment des polymères. Il en existe une grande variété, on choisi généralement un polymère adapté à la composition dont la rhéologie est à modifier, pour lui conférer les propriétés souhaitées, le cas échéant par interaction physique et/ou chimique avec d'autres composés. De nombreux polymères sont ainsi utilisés dans des compositions cosmétiques pour conférer aux compositions une stabilité appropriée, et/ou une viscosité et une texture appréciées des consommateurs. Certaines compositions peuvent présenter une force ionique élevée et/ou comprendre une quantité importante de sels. Dans le domaine du bâtiment et des travaux publics, on cherche souvent à modifier la viscosité de compostions ou de fluides, notamment dans des mises en oeuvre souterraines, où la présence de liquides peut être gênante, en particulier dans des opérations d'excavations, de creusement et/ou de construction de tunnels. Dans le domaine de l'exploitation de gisements de pétrole et/ou de gaz, de nombreux fluides sont mis en oeuvre, soit préparés hors de la formation géologique exploitée, soit constitués dans la formation avec un liquide présent dans la formation. Des fluides sont ainsi mis en oeuvre notamment lors des opérations de forage, de stimulation, et de production. Ces fluides requièrent bien souvent une rhéologie bien particulière, avec une viscosité plus importante que celle de l'eau. Ces problématiques sont connues dans ce domaine. Les fluides peuvent présenter une force ionique élevée et/ou contenir des quantités relativement importantes de sels: ils peuvent notamment être à base d'eau de mer, ou de saumures présentes dans les formations géologiques.

Il existe un besoin constant pour de nouveaux polymères, pouvant varier les propriétés rhéologiques de différents fluides, notamment en présence de sels et/ou à force ionique relativement élevée. On note qu'il importe le plus souvent que les polymères soient stables dans le fluide ou de stabilité contrôlable, c'est-à-dire qu'ils ne se séparent pas des autres constituants, de manière notamment à ce que les propriétés rhéologiques, soient conservées le temps voulu. On note également qu'il importe parfois que les propriétés rhéologiques soient obtenues dans des conditions particulières, par exemple dans des conditions de température et/ou de pression sévères. Ce peut être le cas notamment pour des fluides mis en oeuvre dans certaines opérations souterraines, par exemple dans le cadre de l'exploitation de gisements de pétrole et/ou de gaz. Ce peut être le cas également dans le cadre d'une mise en oeuvre de certains processus industriels de fabrications.

Des copolymères comprenant des unités comprenant un groupe bétaïne sont connus.

Le document US6346588 (SKW) décrit des terpolymères de 1 à 75% en moles d'unités dérivant d'une sulfobétaïne, 5 à 79% d'unités dérivant d'acrylamide (AM), et de 20 à 94% d'unités de type méthacrylate d'hydroxyethyle (HEMA). Toutes ces unités sont des unités hydrophiles. Les terpolymères présentent des effets d'épaississement de milieux salins.

Les documents US4742135, US4650848 et/ou US4882405 (Exxon) décrivent des terpolymères de 1 à 30% en moles d'unités dérivant d'une sulfobétaïne, 70 à 95% d'unités dérivant d'acrylamide (AM), et 0,1 à 5% d'unités hydrophobes dérivant d'alkylacrylamide. La polymérisation est réalisée en présence de fortes quantités de tensioactif (SDS) ne permettant pas l'obtention de groupements des unités hydrophobes. Par ailleurs, la polymérisation s'avère difficile à reproduire. Les terpolymères présentent des effets d'épaississement de milieux salins.

Le document US4788247 (Exxon) décrit des terpolymères de 1 à 30% en moles d'unités dérivant d'une sulfobétaïne, 70 à 95% d'unités dérivant d'acrylamide (AM), et 0,1 à 5% d'unités hydrophobes dérivant d'un acrylate d'alcool éthoxylé. La polymérisation est réalisée en présence de fortes quantités de tensioactif (SDS) ne permettant pas l'obtention de groupements des unités hydrophobes. Par ailleurs, la polymérisation s'avère difficile à reproduire. Les terpolymères présentent des effets d'épaississement de milieux salins.

Les documents US4607076 et/ou US5153289 (Exxon) décrivent des copolymères d'unités dérivant d'une sulfobétaïne et d'unités dérivant de vinyl-pyrrolidone (VP). Toutes ces unités sont des unités hydrophiles. Les copolymères présentent des effets d'épaississement de milieux salins.

Les documents US4585846, US4822847 et/ou US4708998 (Exxon) décrit des copolymères d'unités dérivant d'une sulfobétaïne de structure spéciales et d'unités dérivant de vinyl-pyrrolidone (VP). Toutes ces unités sont des unités hydrophiles. Les copolymères présentent des effets d'épaississement de milieux salins.

Le document US6284854 (Biocompatibles) décrit des copolymères de 10 à 50% en moles d'unités dérivant

de sulfobétaïnes et 50 à 90% d'unités hydrophobes. Ces copolymères sont utilisés comme revêtements biocompatibles. Les polymérisations sont réalisées en solution, ce qui ne permet pas l'obtention de groupements des unités hydrophobes.

Le document "Hydrophobically modified acrylamide-based polybetaines. I. Synthesis, Characterization and Stimuli-Responsive Solution behavior", M. Johnson et al., Journal of Applied Polymer Science, Volume 92, Issue 1, pp. 647-657 (2004), décrit des terpolymères d'unités dérivant de certaines sulfobétaïnes, d'acrylamide, et de N-butylphénylacrylamide (BPAM). Les terpolymères sont préparés par polymérisation micellaire. La polymérisation est réalisée en présence de fortes quantités de tensioactif (SDS) ne permettant pas l'obtention de groupements significatifs des unités hydrophobes (valeur de $n_H$ de 2,1).

On connaît également des procédés de polymérisation radicalaire micellaire permettant de polymériser dans une chaîne macromoléculaire hydrophile des unités dérivant de monomères hydrophobes.

Les documents US4831092 et/ou US4835234 (Exxon) décrivent un procédé de polymérisation micellaire de certains monomères. Le procédé est mis en oeuvre de manière discontinue ("batch" en anglais).

Les documents EP1250360 et/ou US417268 (Hercules) décrivent un procédé de polymérisation micellaire de certains monomères. Ces documents décrivent une suite d'étapes spéciales de préparation du milieu réactionnel, mais la polyérisation est mise en oeuvre de manière discontinue ("batch" en anglais).

Le document WO99/03895 (Rhodia) décrit un procédé de polymérisation micellaire de certains monomères. Le procédé comprend la préparation préalable d'une charge initiale comprenant des monomères hydrophiles et des micelles de monomères hydrophobes. Puis une solution d'initiateur et une autre solution comprenant d'autres monomères hydrophiles et des micelles de monomères hydrophobes sont ajoutées en continu.

Il subsiste un besoin pour de nouveaux polymères présentant des propriétés modifiées, notamment:
Le document WO2005/070979 décrit une synthèse de particules inorganiques employant un copolymère statistique à base d'unités hydrophobes et d'unités hydrophiles.

Le document EP0370338 décrit un procédé de copolymérisation pour la fixation capillaire propre à la préparation d'homopolymères ou de polymères statistiques.

- une bonne stabilité à force ionique relativement élevée, notamment un milieu relativement salin
- un bon pouvoir d'épaississement de milieux à force ionique relativement élevée, notamment de milieux salins, voire très salins,
- une bonne tenue de la stabilité et/ou de l'épaississement à température relativement élevée, et/ou
- un pouvoir d'épaississement à de faibles teneurs en polymère,
- une conjonction et/ou compromis amélioré d'au moins deux de ces propriétés.

Il subsiste également un besoin pour des procédés de préparation de copolymères améliorés et/ou pouvant présenter au moins une des propriétés mentionnées ci-dessus.

L'invention satisfait au moins un des besoins exprimés ci-dessus en proposant un copolymère comprenant:

- une chaîne macromoléculaire A comprenant des unités $A_Z$ comprenant un groupe bétaïne, le groupe bétaïne comprenant un groupe cationique et un groupe anionique, et éventuellement d'autres unités hydrophiles $A_{autre}$,
- au moins un groupement B d'unités B hydrophobes ($B_{phobe}$) et/ou amphiphiles ($B_{amphi}$), à la condition que si le groupement B ne comprend que des unités hydrophobes ($B_{phobe}$) , alors le nombre $n_H$ d'unités hydrophobes dans le groupement B est supérieur ou égal à 2,6 de préférence supérieur ou égal à 3, de préférence supérieur ou égal à 5, de préférence de préférence supérieur ou égal à 10.

L'invention propose également un procédé de préparation d'un copolymère comprenant:

- des unités $A_Z$ comprenant un groupe bétaïne, le groupe bétaïne comprenant un groupe cationique et un groupe anionique, et éventuellement d'autres unités hydrophiles $A_{autre}$, et
- au moins un groupement B d'unités B hydrophobes ($B_{phobe}$) et/ou amphiphiles ($B_{amhi}$),

ledit procédé étant un comprenant les étapes suivantes:

a) on prépare un fluide aqueux B

- le fluide aqueux B comprenant:
  - au moins un monomère B éthylèniquement insaturé, hydrophobe ($B_{phobe}$) et/ou amphiphile ($B_{amphi}$), et
  - éventuellement un tensioactif,
  - à la condition que si le monomère B est un monomère hydrophobe $B_{phobe}$, alors le fluide aqueux B comprend

un tensioactif,

- le monomère B étant compris dans des micelles de tensioactif et/ou de monomère amphiphile $B_{amphi}$
- avec au moins une des conditions suivantes:

  - le nombre $n_H$ de monomères dans les micelles est supérieur à 2,6, de préférence supérieur ou égal à 3, de préférence supérieur ou égal à 5, de préférence supérieur ou égal à 10, et/ou
  - le rapport en moles entre le tensioactif, et le monomère B est inférieur ou égal à 28, de préférence inférieur ou égal à 20, de préférence inférieur ou égal à 15, de préférence inférieur ou égal à 10, de préférence inférieur ou égal à 7, et/ou
  - le rapport en poids entre le tensioactif, s'il est présent, et le monomère B est inférieur ou égal à 30, de préférence inférieur ou égal à 20, de préférence inférieur ou égal à 15, de préférence inférieur ou égal à 10, de préférence inférieur ou égal à 7,

b) on polymérise par mise en présence en milieu aqueux:

- des micelles du fluide aqueux B,
- de monomères $A_Z$ ou $A_Z$ précurseur et éventuellement d'autres monomères hydrophiles $A_{autre}$ ces monomères étant en solution dans le milieu aqueux, les monomères $A_Z$ étant des monomères comprenant un groupe bétaïne, les monomères $A_Z$ précurseur étant des monomères comprenant un groupe susceptible d'être utilisé pour former des groupes bétaïne $A_Z$ par une réaction subséquente à la polymérisation, et
- d'une source de radicaux libres, et

c) éventuellement, si des monomères $A_{Z\ précurseur}$ ont été mis en oeuvre lors de l'étape b), on fait réagir les unités dérivant de ces monomères de manière à former des groupes bétaïne $A_Z$.

L'invention concerne également le copolymère susceptible d'être obtenu par le procédé.

L'invention propose également des utilisations de tels copolymères, notamment comme agent de modification de la rhéologie, notamment comme agent épaississant, d'une solution aqueuse, notamment d'une solution de force ionique relativement élevée. L'invention concerne aussi un procédé de modification, notamment d'épaississement, des compositions aqueuses, notamment de celles de force ionique relativement élevée, pouvant comprendre notamment des sels, par ajout du copolymère.

L'invention concerne également des compositions aqueuses comprenant le copolymère, et de préférence aussi des composés augmentant la force ionique, notamment des sels.

L'invention concerne également des fluides, notamment des fluides mis en oeuvre pour l'exploitation de gisements de pétrole et/ou de gaz, comprenant de tels copolymères et de préférence aussi des composés augmentant la force ionique, notamment des sels. L'invention concerne également des procédés mis en oeuvre pour l'exploitation de gisements de pétrole et/ou de gaz, comprenant une étape de mise en oeuvre, par exemple une circulation ou un placement, d'un fluide comme mentionné ci-dessus.

## Définitions

Dans la présente demande, on désigne par unité dérivant d'un monomère, pour les unités différentes des unités $A_{Z\ précurseur}$, une unité qui peut être obtenue directement à partir dudit monomère par polymérisation. Ainsi, par exemple, une unité dérivant d'un ester d'acide acrylique ou méthacrylique ne couvre pas une unité de formule $-CH_2-CH(COOH)-$,$-CH_2-C(CH_3)(COOH)-$,$-CH_2-CH(OH)-$, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule $-CH_2-CH(COOH)-$, ou $-CH_2-C(CH_3)(COOH)-$. Une unité dérivant d'un alcool vinylique couvre par exemple une unité obtenue en polymérisant un monomère (par exemple un ester vinylique), puis en faisant réagir (par exemple par hydrolyse) le polymère obtenu de manière à obtenir des unités de formule $-CH_2-CH(OH)-$. Des unités dérivant d'un monomère $A_Z$ peuvent par exemple avoir été obtenues par polymérisation de monomères $A_{Z\ précurseurs}$ puis réaction post-polymérisation pour obtenir des unités comprenant le groupe bétaïne. Les unités $A_Z$ ne sont pas considérées comme des unités dérivant de monomères $A_{Z\ précurseur}$ ne comprenant pas de groupe bétaïne.

Dans la présente demande, le terme «hydrophobe» est utilisé dans son sens usuel de «qui n'a pas d'affinité pour l'eau»; cela signifie que le polymère organique dont il est constitué, pris seul (de même composition et de même

masse molaire), formerait une solution macroscopique diphasique dans de l'eau distillée à 25°C, à une concentration supérieure à 1% en poids.

Dans la présente demande, les termes «hydrophile», "hydrosoluble" et "hydrodispersable" sont également utilisés dans leur sens usuel de «qui a de l'affinité pour l'eau», c'est-à-dire n'est pas susceptible de former une solution macroscopique diphasique dans de l'eau distillée à 25°C à une concentration supérieure à 1% en poids.

Par unités $A_C$ cationiques ou potentiellement cationiques, on entend des unités qui comprennent un groupe cationique ou potentiellement cationique. Les unités ou groupes cationiques sont des unités ou groupes qui présentent au moins une charge positive (généralement associée à un ou plusieurs anions comme l'ion chlorure, l'ion bromure, un groupe sulfate, un groupe méthylsulfate), quel que soit le pH du milieu dans lequel le copolymère est introduit. Les unités ou groupes potentiellement cationiques sont des unités ou groupes qui peuvent être neutres ou présenter au moins une charge positive selon le pH du milieu le copolymère est introduit. Dans ce cas on parlera d'unités potentiellement cationiques sous forme neutre ou sous forme cationique. Par extension on peut parler de monomères cationiques ou potentiellement cationiques.

Par unités $A_A$ anioniques ou potentiellement anioniques, on entend des unités qui comprennent un groupe anionique ou potentiellement anionique. Les unités ou groupes anioniques sont des unités ou groupes qui présentent au moins une charge négative (généralement associée à un ou plusieurs cations comme des cations de composés alcalins ou alcalino-terreux, par exemple le sodium, ou à un ou plusieurs composés cationiques comme l'ammonium), quel que soit le pH du milieu où est présent le copolymère. Les unités ou groupes potentiellement anioniques sont des unités ou groupes qui peuvent être neutres ou présenter au moins une charge négative selon le pH du milieu où est présent le copolymère. Dans ce cas on parlera de d'unités potentiellement anioniques $A_A$ sous forme neutre ou sous forme anionique. Par extension on peut parler de monomères anioniques ou potentiellement anioniques.

Par unités $A_N$ neutres, on entend des unités qui ne présentent pas de charge, quel que soit le pH du milieu où est présent le copolymère.

Dans la présente demande, sauf indications contraires, lorsqu'on parlera de masse molaire, il s'agira de la masse molaire moyenne en masse absolue, exprimée en g/mol. Celle-ci peut être déterminée par chromatographie de perméation de gel aqueux (GPC), par diffusion de lumière (DDL ou encore MALLS pour un éluant aqueux), avec un éluant aqueux ou un éluant organique (par exemple le formamide) selon la composition du polymère.

Dans la présente demande, sauf mention contraire, les quantités et proportions sont indiquées en matière active (par opposition à la matière diluées ou dispersée), et en poids.

Lors d'une polyérisation micellaire, on forme dans un fluide aqueux des micelles comprenant des monomères hydrophobes ($B_{phobe}$) et/ou amphiphile ($B_{phobe}$). Le nombre de monomères dans ces micelles est noté $n_H$. Les micelles peuvent être des micelles d'un composé tensioactif non polymérisable, avec un monomère hydrophobe ($B_{phobe}$)et/ou amphiphile ($B_{phobe}$) compris à l'intérieur des micelles. Les micelles peuvent être constituées d'un monomère amphiphile formant des micelles par auto-association à la quantité où il est utilisé, lesdites micelles ne comprenant pas en plus de monomère hydrophobe. Les micelles peuvent être constituées d'un monomère amphiphile ($B_{amphi}$) formant des micelles par auto-association à la quantité où il est utilisé, lesdites micelles comprenant en plus à l'intérieur un monomère hydrophobe. Les micelles peuvent comprendre un tensioactif non polymérisable et un monomère amphiphile ($B_{amphi}$) dont l'association permet de former des micelles(co-micellisation), lesdites micelles ne comprenant pas en plus de monomère hydrophobe. Les micelles peuvent comprendre un tensioactif non polymérisable et un monomère amphiphile ($B_{amphi}$) dont l'association permet de former des micelles (co-micellisation), lesdites micelles comprenant en plus à l'intérieur un monomère hydrophobe ($B_{phobe}$). Le nombre $n_H$ correspond au nombre total de monomères hydrophobes ($B_{phobe}$) dans la micelle, lorsque la micelle ne comprend que des monomères hydrophobes ($B_{phobe}$).

Le nombre $n_H$ peut être évalué comme enseigné dans le document P. Kuiawa ; J. M. Rosiak; J. Selb; F. Candau Macromolecular Chem. & Physics, 202, 8, 1384-1397, 2001:

$$n_H = \frac{[Monomère]\ x\ N_{agg}}{[tensioactif] - CMC}$$

où:

- [Monomère] est la concentration (molaire) en monomère hydrophobe et/ou amphiphile
- $N_{agg}$ est le nombre d'agrégation du tensioactif
- [tensioactif] est la concentration (molaire) en tensioactif ou la somme des concentrations molaires en tensioactif et en monomère amphiphile si celui-ci participe à la formation de la micelle,
- CMC est la concentration micellaire critique (molaire) du tensioactif ou du monomère amphiphile ou de l'association du monomère amphiphile et du tensioactif, si le monomère tensioactif participe à la formation de la micelle.

Les concentrations micellaires critiques et les nombres d'agrégation sont le plus souvent connus dans la littérature. Alternativement, ils peuvent être évalués par le protocole décrit dans P. Becher J. Colloid Sci. 16, 49, 1961.
A titre de valeurs utiles pour la détermination de certains $n_H$, on mentionne notamment:

Masses molaires :

- Sodium Docédylsulfate ("SDS"): Mw SDS = 288 g/mol
- Méthacrylate de lauryle = 254 g/mol

CMC et nombre d'agrégation du sodium dodécylsulfate

cmc SDS = 0,007 mol/L = 0,2 % en poids
$N_{agg}$ SDS = 62
Référence: «Remove detergent from protein samples » TECHNICAL
RESOURCE TR0019.0
PIERCE, 3747 N. Meridian Road
P.O. Box 117
Rockford, IL 61105

On peut considérer que le nombre de d'unités hydrophobes et/ou amphiphiles, d'un groupement B, est égal en moyenne au nombre de monomères compris dans une micelle, les dites micelles étant formées pour la mise en oeuvre d'une polyérisation micellaire contrôlée. Il n'est toutefois pas exclu d'opérer d'autres types de polyérisation, par exemples des polymérisation radicalaire séquencées, avec de préférence au moins 3 séquences, de préférence au moins 5, de manière contrôlée, en ayant connaissance du nombre $n_H$ de monomère engagés par chaîne macromoléculaire lors des séquences pertinentes.

Copolymère

Le copolymère de l'invention comprend:

- une chaîne macromoléculaire A comprenant des unités $A_Z$ comprenant un groupe bétaïne, le groupe bétaïne comprenant un groupe cationique et un groupe anionique, et éventuellement d'autres unités hydrophiles $A_{autre}$,
- au moins un groupement B d'unités hydrophobes ($B_{phobe}$) et/ou amphiphiles ($B_{amphi}$).

Si le groupement B le groupement ne comprend que des unités hydrophobes ($B_{phobe}$), alors le nombre $n_H$ d'unités hydrophobes dans le groupement B est supérieur ou égal à 2,6 de préférence supérieur ou égal à 3, de préférence supérieur ou égal à 5, de préférence de préférence supérieur ou égal à 10.
La chaîne macromoléculaire A est typiquement une chaîne macromoléculaire linéaire des unités comprenant le groupe bétaïne et des éventuelles autres unités hydrophiles. Cette chaîne macromoléculaire est interrompue par (ou entrecoupée par) des groupements B d'unités hydrophobes et/ou amphiphiles. Les groupements B avec la chaîne macromoléculaire A forment typiquement une chaîne macromoléculaire linéaire, dite "chaîne complète". Une telle chaîne macromoléculaire ("chaîne complète") peut typiquement être obtenue par polymérisation micellaire contrôlée. Le nombre de d'unités des groupements B est noté $n_H$. Ce nombre peut être varié en fonction du procédé choisi et des conditions opératoires choisies (notamment par les quantités et ratios des monomères utilisés et/ou par les natures, quantités et ratios de tensioactifs utilisés lors du procédé de polymérisation). Le nombre de groupements B peut également être varié en fonction du procédé choisi et des conditions opératoires choisies (notamment par les quantités et ratios des monomères et/ou initiateurs utilisés et/ou par les natures, quantités et ratios de tensioactifs utilisés lors du procédé de polyérisation ).
Les unités $A_Z$ comprenant un groupe bétaïne et éventuellement les autres unités hydrophiles $A_{autre}$ forment de préférence une chaîne macromoléculaire A à chaîne hydrocarbonée polyalkylène éventuellement interrompue par un ou plusieurs atomes d'azote ou de soufre (de tels atomes peuvent ne pas interrompre la chaîne macromoléculaire). La chaîne complète forme de préférence une chaîne macromoléculaire à chaîne hydrocarbonée polyalkylène éventuellement interrompue par un ou plusieurs atomes d'azote ou de soufre (de tels atomes peuvent ne pas interrompre la chaîne macromoléculaire). La chaîne hydrocarbonée polyalkylène éventuellement interrompue est assimilé à une dorsale (ou un squelette - "backbone" en anglais) des chaînes macromoléculaires, lesdites chaînes macromoléculaires comprenant généralement des groupes pendants (latéraux) des différentes unités, en particulier les groupes bétaïne.
Les groupements B, généralement en nombre supérieur ou égal à 2 (il y a plusieurs), peuvent typiquement interrompre la chaîne macromoléculaire A de manière statistique. Ainsi, le long de la chaîne complète, les groupements

B, séparés par les unités constituant la chaîne macromoléculaire A, peuvent être plus ou moins espacés les uns des autres, la répartition des espacements étant typiquement statistique. On note que des groupements B peuvent être présents en bout de la chaîne complète. Toutefois, ceci n'est pas particulièrement recherché, et souvent les groupements B ne seront pas présents en bout de la chaîne complète (plus de 50% en poids des chaînes complètes ne comportent pas de groupements B en bout de chaîne).

Le nombre de groupements B peut notamment être supérieur ou égal à 2, de préférence supérieur ou égal à 3, par exemple supérieur ou égal à 5 ou même à 10. La chaîne complète peut notamment ainsi ressembler à une chaîne multi-séquencée avec un nombre de séquence supérieur ou égal à 4, de préférence supérieur ou égal à 5, de préférence supérieur ou égal à 6, par exemple supérieur ou égal à 9 ou 10 ou 11, ou même supérieur ou égal à 19, ou 20, ou 21.

La chaîne macromoléculaire A est typiquement hydrosoluble, c'est-à-dire qu'un polymère constitué uniquement des unités de la chaîne macromoléculaire A, sans les groupements B, de masse moléculaire moyenne similaire (par exemple obtenu dans les mêmes conditions de polymérisation, notamment avec même un rapport initiateur/monomères avec les mêmes conditions opératoires), serait hydrosoluble (à 25°C et à 1% en poids).

Le nombre $n_H$ est de préférence inférieur à 100, de préférence inférieur 50, de préférence inférieur à 25. Il peut par exemple être compris entre 3 et 50, de préférence entre 5 et 30, par exemple entre 10 et 25.

Unités $A_Z$

Le groupe bétaïne des unités $A_Z$ comprend un groupe anionique et un groupe cationique. Le groupe anionique peut notamment être un groupe carbonate, groupe souffré comme un groupe sulfonate, un groupe phosphoré comme un groupe phosphate, phosphonate, phospinate ou un groupe éthénolate. De préférence il s'agit d'un groupe sulfonate. Le groupe cationique peut être un groupe onium ou inium de la famille de l'azote du phosphore ou du souffe par exemple un groupe ammonium, pyrididium, imidazolinium, phosphonium ou sulfonium. De préférence il s'agit d'un groupe ammonium (de préférence quaternaire). Le groupe bétaïne peut notamment être un groupe sulfobétaïne ou phosphonobétaïne ou carboxybétaïne. Les copolymères comprenant un groupe carboxybétaïne présentent généralement de fortes teneures en contre ions (sels présents, liés au procédé de préparation de ces groupes); ceci peut en rendre la synthèse moins pratique et/ou en rendre l'efficacité moindre. Avantageusement le groupe bétaïne est un groupe sulfobétaïne comprenant un groupe sulfonate et un groupe ammonium quaternaire. On note qu'on ne sortirait pas du cadre de l'invention en associant plusieurs groupes bétaïne différents, en associant dans le copolymère plusieurs unités $A_Z$ différentes.

Les groupes bétaïne sont typiquement des groupes pendants du copolymère, obtenus typiquement à partir de monomères comprenant au moins une insaturation éthylénique.

Au sein des unités $A_Z$, le nombre de charges positives est égal au nombre de charges négatives. Les unités $A_Z$ sont électriquement neutres, dans au moins une gamme de pH.

Des groupes bétaïnes utiles peuvent être représentés, dans le cas des cations de la famille de l'azote, par les formules (I) à (V) présentant une charge cationique au centre de la fonction et une charge anionique en extrémité de la fonction et de formule (VI) présentant une charge anionique au centre de la fonction et une charge cationique en extrémité de la fonction, suivantes :

$$-N^{(+)}(R^1)(R^2)\text{-}R\text{-}A\text{-}O^{(-)} \qquad (I)$$

$$-(R^3)C{=}N^{(+)}(R^4)\text{-}R\text{-}A\text{-}O^{(-)} \qquad (II)$$

$$-(R^3)(R)C\text{-}N^{(+)}(R^4)(R^5)\text{-}R\text{-}A\text{-}O^{(-)} \qquad (III)$$

$$-N^{(+)}(=R^6)\text{-}R\text{-}A\text{-}O^{(-)} \qquad (IV)$$

$$-R\text{-}A'(-O^{(-)})\text{-}R\text{-}N^{(+)}(R^1)(R^2)(R^7) \qquad (V)$$

- formules (I) à (IV) dans lesquelles:
  - les symboles $R^1$, $R^2$ et $R^5$, semblables ou différents représentent un radical alkyle contenant de 1 à 7 atomes de carbone, de préférence de 1 à 2 atomes de carbone
  - les symboles $R^3$ et $R^4$ représentent des radicaux hydrocarbonés formant avec l'atome d'azote un hétérocycle azoté comportant éventuellement un ou plusieurs autres hétéroatomes, d'azote notamment
  - le symbole $R^6$ représente un radical hydrocarboné formant avec l'atome d'azote un hétérocycle azoté, saturé ou insaturé, comportant éventuellement un ou plusieurs autres hétéroatomes, d'azote notamment

  - le symbole R représente un radical alkylène linéaire ou ramifié comprenant de 1 à 15 atomes de carbone, de préférence de 2 à 4 atome de carbone, éventuellement substitué par un ou plusieurs groupes hydroxy, ou un radical benzylène
  - le symbole A représente S(=O)(=O), OP(=O)(=O), OP(=O)(OR'), P(=O)(OR') ou P(=O)(R'), où R' représente un radical alkyle contenant de 1 à 7 atomes de carbone ou un radical phényle

- formule (V) dans laquelle,

  - les symboles $R^1$ et $R^2$, ont la définition donnée ci-dessus
  - les symboles $R^7$, semblable ou différent de $R^1$ ou $R^2$, représente un radical alkyle contenant de 1 à 7 atomes de carbone, de préférence de 1 à 2 atomes de carbone
  - le symbole A' représente -O-P(=O)-O-.

Dans le cas de <u>cations de la famille du phosphore</u>, on peut mentionner les groupes bétaïnes de formules (VI) et (VII):

$$-P^{(+)}(R^1)(R^2)\text{-R-A-}O^{(-)} \qquad (VI)$$

$$\text{- R-A'}(\text{-}O^{(-)}\text{-R-}P^{(+)}(R^1)(R^2)(R^7) \qquad (VII)$$

- formule (VI) dans laquelle les symboles $R^1$ , $R^2$, R et A ont la définition donnée ci-dessus
- formule (VII) dans laquelle

  - les symboles $R^1$ , $R^2$, $R^7$ et R ont la définition donnée ci-dessus
  - le symbole A' représente -O-P(=O)-O-

Dans le cas de <u>cations de la famille du soufre</u>, on peut mentionner les groupes bétaïnes de formules (VIII) et (IX):

$$-S^{(+)}(R^1)\text{-R-A-}O^{(-)} \qquad (VIII)$$

$$\text{-R-A'}(\text{-}O^{(-)})\text{-R-}S^{(+)}(R^1)(R^2) \qquad (IX)$$

- formule (VIII) dans laquelle les symboles $R^1$, R et A ont la définition donnée ci-dessus
- formule (IX) dans laquelle

  - les symboles $R^1$, $R^2$ et R ont la définition donnée ci-dessus
  - le symbole A' représente -O-P(=O)-O-.

Les groupes bétaïne peuvent être reliés aux atomes de carbone d'une chaîne macromoléculaire A du copolymère par l'intermédiaire notamment d'un motif hydrocarboné divalent ou polyvalent (par exemple alkylène ou arylène) éventuellement interrompu par un ou plusieurs hétéroatomes, d'oxygène ou d'azote notamment, un motif ester, un motif amide, ou bien par un lien valentiel.

Le copolymère peut notamment être obtenu par polymérisation radicalaire

- de monomères $A_Z$ comprenant un groupe bétaïne éthylèniquement insaturé, notamment de monomères éthylèniquement insaturés portant au moins un groupe bétaïne de formule (I) à (IX) ci-dessus,
- et d'autres monomères, comprenant des monomères B (monomères $B_{phobe}$ et/ou $B_{amphi}$) dont dériveront les unités B hydrophobes ($B_{phobe}$) et/où amphiphiles ($B_{amphi}$) des groupements B, et éventuellement d'autres monomères $A_{autre}$ dont dériveront les unités $A_{autre}$ hydrophiles optionnelles des chaînes macromoléculaires A.

Lesdits monomères $A_Z$ peuvent présenter, à titre d'exemple:

- un ou plusieurs radicaux hydrocarbonés mono- ou poly-éthylèniquement insaturés (notamment vinyle, allyle, styrényle ...),
- un ou plusieurs radicaux esters mono- ou poly-éthylèniquement insaturés (notamment acrylate, méthacrylate, maléate ...), et/ou

- un ou plusieurs radicaux amides mono- ou poly-éthylèniquement insaturés (notamment acrylamido, méthacrylamido ...).

Les unités $A_Z$ peuvent dériver d'au moins un monomère bétaïne $A_Z$ sélectionné dans le groupe constitué des monomères suivants:

- les alkylsulfonates ou phosphonates de dialkylammonium alkyl acrylates ou méthacrylates, acrylamido ou méthacrylamido, comme:

    - le sulfopropyl diméthyl ammonium éthyl méthacrylate, commercialisé par RASCHIG sous le nom SPE :

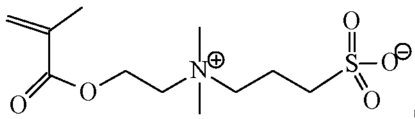

(SPE)

    - le sulfoéthyl diméthyl ammonium éthyl méthacrylate et le sulfobutyl diméthyl ammonium éthyl méthacrylate:

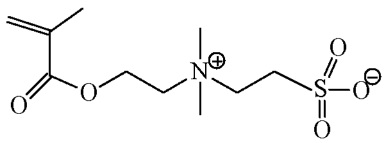

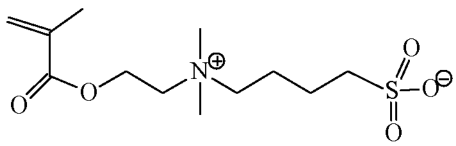

,

dont la synthèse est décrite dans l'article « Sulfobetaine Zwitterionomers based on n-butyl acrylate and 2-Ethoxyethyl acrylate : monomer synthesis and copolymerization behavior », Journal of Polymer Science 40, 511-523 (2002).

    - le sulfohydroxypropyl diméthyl ammonium éthyl méthacrylate:

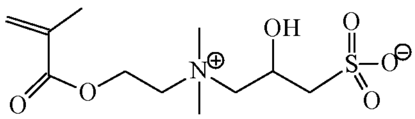

(SHPE)

    - le sulfopropyl diméthylammonium propyl acrylamide:

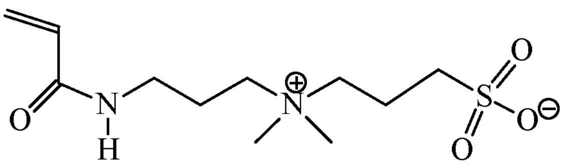

,

dont la synthèse est décrite dans l'article "Synthesis and solubility of the poly(sulfobetaine)s and the corresponding cationic polymers: 1. Synthesis and characterization of sulfobetaines and the corresponding cationic monomers by nuclear magnetic resonance spectra", Wen-Fu Lee and Chan-Chang Tsai, Polymer, 35 (10), 2210-2217 (1994).

    - le sulfopropyl diméthylammonium propyl méthacrylamide, commercialisé par RASCHIG sous le nom SPP:

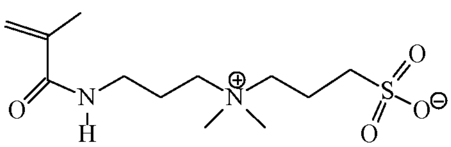

(SPP),

    - le sulfopropyl diméthylammonium éthyl méthacrylate, commercialisé par RASCHIG sous le nom SPDA:

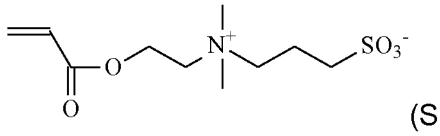

(SPDA)

- le sulfohydroxypropyl diméthyl ammonium propyl méthacrylamido

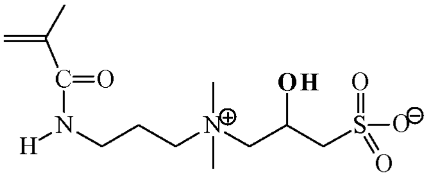

(SHPP)

- le sulfopropyl diéthyl ammonium éthyl méthacrylate:

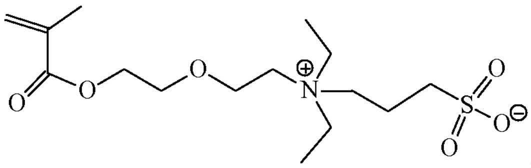

,

dont la synthèse est décrite dans l'article « Poly(sulphopropylbetaines) : 1. Synthesis and characterization », V. M. Monroy Soto and J. C. Galin, Polymer, 1984, Vol 25, 121-128.

- le sulfohydroxypropyl diéthyl ammonium éthyl méthacrylate:

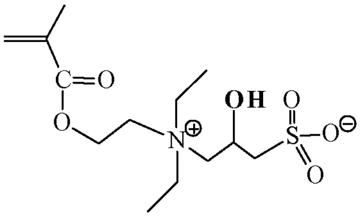

- les monomères bétaïnes hétérocycliques , comme:
  - les sulfobétaines dérivées de la pipérazine:

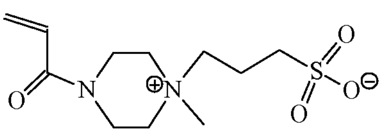

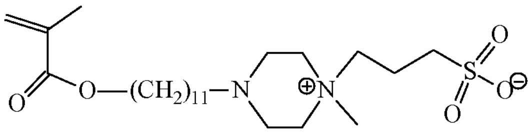

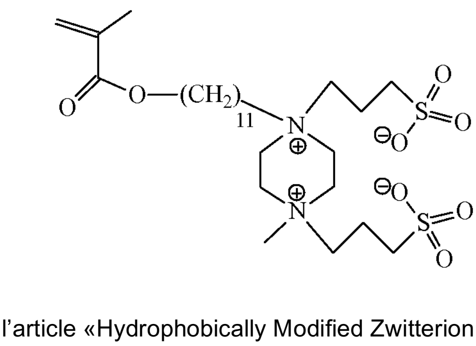

,

dont la synthèse est décrite dans l'article «Hydrophobically Modified Zwitterionic Polymers : Synthesis, Bulk Properties, and Miscibility with Inorganic Salts », P. Koberle and A. Laschewsky, Macromolecules 27, 2165-2173 (1994)

- les sulfobétaines dérivées des 2-vinylpyridine et 4-vinylpyridine, comme
    - la 2-vinyl (3-sulfopropyl) pyridinium bétaïne (2SPV ou "SPV"), commercialisée par RASCHIG sous le nom SPV,

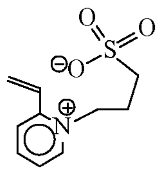

(SPV),

    - la 4-vinyl(3-sulfopropyl)pyridinium bétaïne (4SPV) dont la synthèse est décrite dans l'article «Evidence of ionic aggregates in some ampholytic polymers by transmission electron microscopy», V. M. Castaño and A. E. Gonzàlez, J. Cardoso, O. Manero and V. M. Monroy, J. Mater. Res., 5 (3), 654-657 (1990):

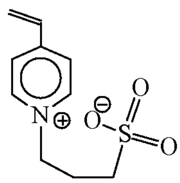

(4SPV)

    - la 1-vinyl-3-(3-sulfopropyl) imidazolium bétaïne:

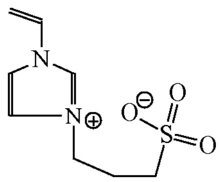

√

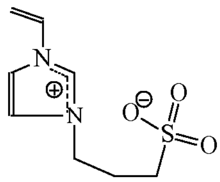

,

dont la synthèse est décrite dans l'article "Aqueous solution properties of a poly(vinyl imidazolium sulphobetaine)", J. C. Salamone, W. Volkson, A.P. Oison, S.C. Israel, Polymer, 19, 1157-1162 (1978)

- les alkylsulfonates ou phosphonates de dialkylammonium alkyl allyliques, comme la sulfopropyl méthyl diallyl ammonium bétaine:

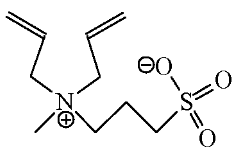

,

dont la synthèse est décrite dans l'article«New poly(carbobetaine)s made from zwitterionic diallylammonium monomers », Favresse, Philippe ; Laschewsky, Andre, Macromolecular Chemistry and Physics , 200(4), 887-895 (1999).

- les alkylsulfonates ou phosphonates de dialkylammonium alkyl styréniques, comme:

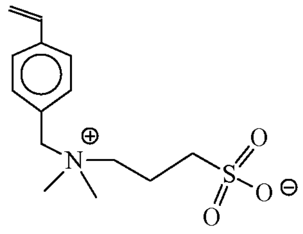

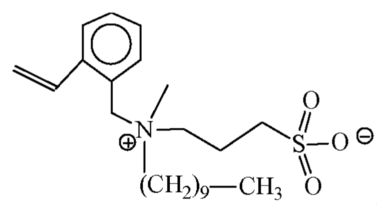

,

dont la synthèse est décrite dans l'article «Hydrophobically Modified Zwitterionic Polymers : Synthesis, Bulk Properties, and Miscibility with Inorganic Salts », P. Koberle and A. Laschewsky, Macromolecules 27, 2165-2173 (1994).

- les bétaïnes issues de diènes et d'anhydrides éthyléniquement insaturés comme:

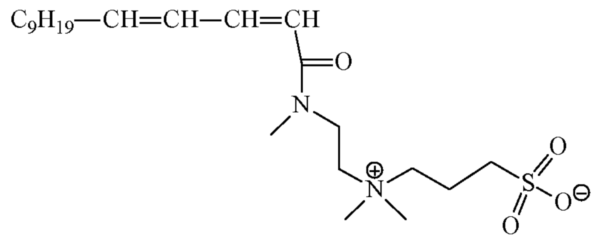

et

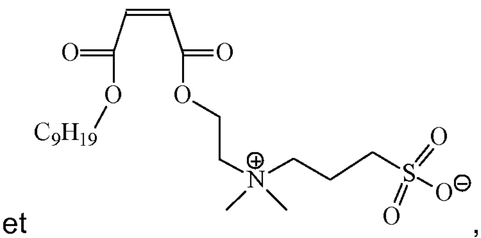

,

dont la synthèse est décrite dans l'article «Hydrophobically Modified Zwitterionic Polymers: Synthesis, Bulk Properties, and Miscibility with Inorganic Salts », P. Koberle and A. Laschewsky, Macromolecules 27, 2165-2173 (1994)

- les phosphobétaines, comme:

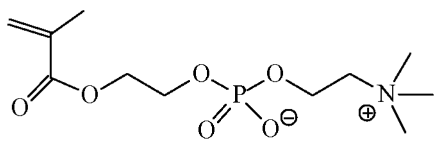

(MPC)

ou encore :

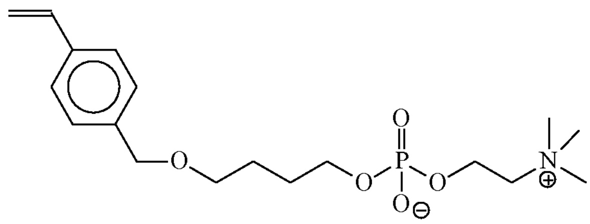

(VPC)

La synthèse du MPC et du VPC est décrite dans EP 810 239 B1 (Biocompatibles, Alister et al.).

Le polymère selon l'invention peut également être obtenu de manière connue par modification chimique d'un polymère dit polymère précurseur, comprenant des unités $A_Z$ précurseur qui seront modifiées (bétaïnisées) par réaction post-polymérisation pour donner des unités $A_Z$ présentant un groupe betaïne. Ainsi des unités sulfobétaïne peuvent être obtenues par modification chimique d'unités d'un polymère précurseur, de préférence par modification chimique d'un polymère comprenant des fonctions amines pendantes, à l'aide d'un composé électrophile sulfonaté, de préférence une sultone (propanesultone, butanesultone), ou un halogenoal kylsulfonate.

Quelques exemples de synthèse sont donnés ci-après:

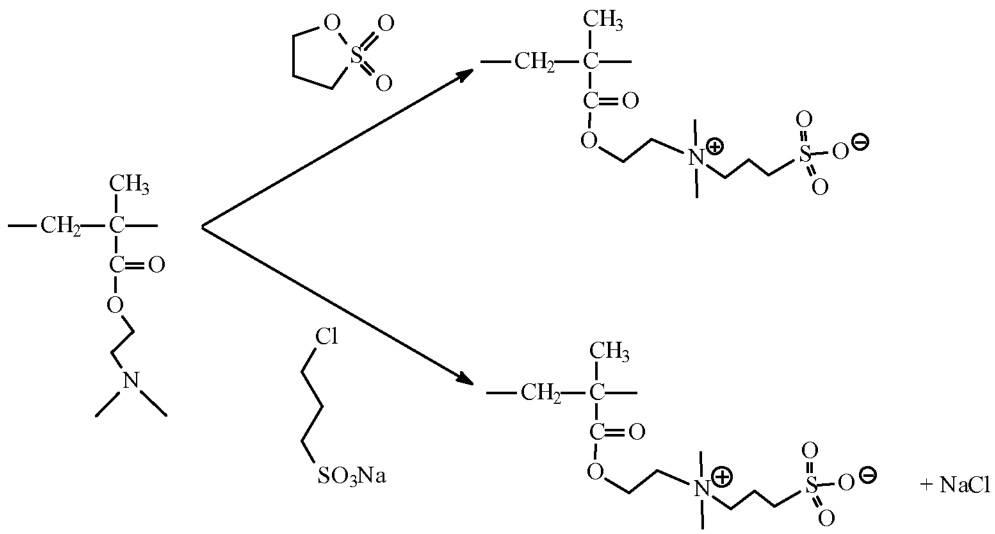

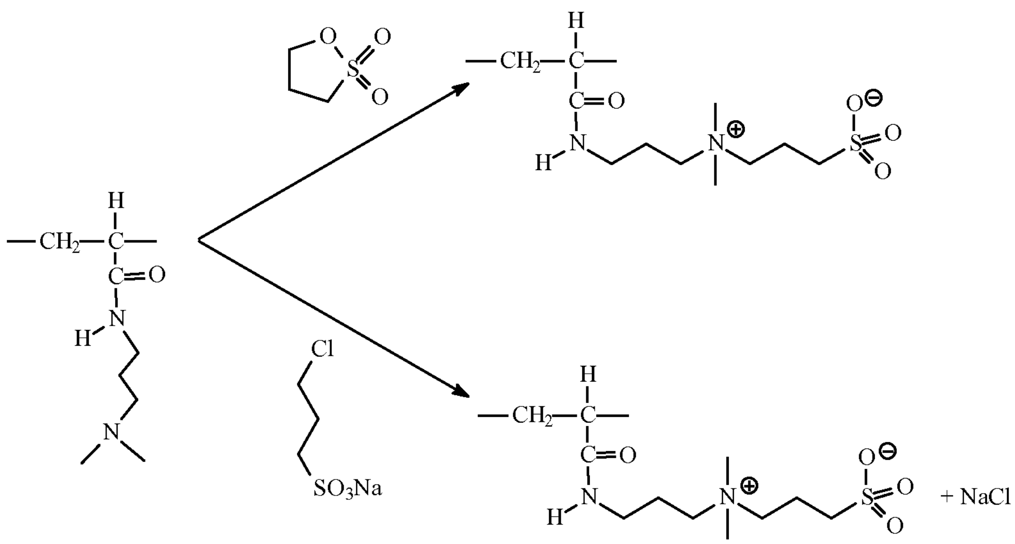

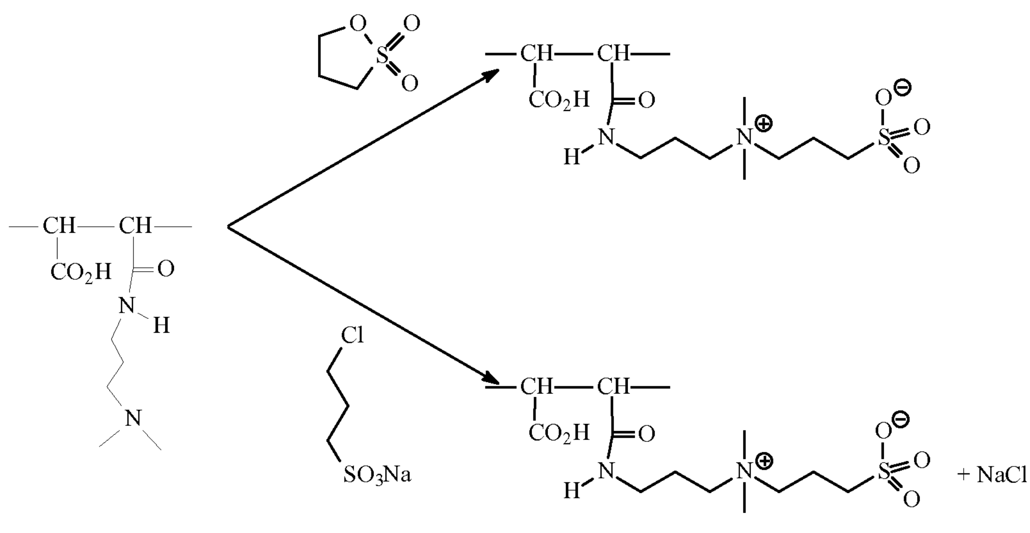

Les principales voies d'accès par modification chimique de polymère précurseur par les sultones et les halogenoalkylsufonates sont décrites notamment dans les documents suivants:

- "Synthesis and aqueous solution behaviour of copolymers containing sulfobetaine moieties in side chains", I.V. Berlinova, I.V. Dimitrov, R.G. Kalinova, N.G. Vladimirov, Polymer41, 831-837 (2000)
- "Poly(sulfobetaine)s and corresponding cationic polymers: 3. Synthesis and dilute aqueous solution properties of poly(sulfobetaine)s derived from styrene-maleic anhydride)", Wen-Fu Lee and Chun-Hsiung Lee, Polymer 38 (4), 971-979 (1997)
- "Poly(sulfobetaine)s and corresponding cationic polymers. VIII. Synthesis and aqueous solution properties of a cationic poly(methyl iodide quaternized styrene-N,N-dimethylaminopropyl maleamidic acid) copolymer", Lee, Wen-Fu; Chen, Yan-Ming, Journal of Applied Polymer Science 80, 1619-1626 (2001)
- "Synthesis of polybetaines with narrow molecular mass distribution and controlled architecture", Andrew B. Lowe, Norman C. Billingham and Steven P. Armes, Chern. Commun., 1555-1556 (1996)
- "Synthesis and Properties of Low- Polydispersity Poly(sulfopropylbetaine)s and Their Block Copolymers", Andrew B. Lowe, Norman C. Billingham, and Steven P. Armes, Macromolecules 32, 2141-2146 (1999)
- demande de brevet japonais publiée le 21 décembre 1999, sous le numéro 11-349826.

La préparation de polyphosphonato- et phosphinatobétaïnes par modification chimique est reportée dans «New polymeric phosphonato-, phosphinato- and carboxybétaïnes», T. Hamaide, Makromolecular Chemistry 187, 1097-1107 (1986).

Selon un mode de réalisation préféré, les unités $A_Z$ présentent l'une des formules suivantes:

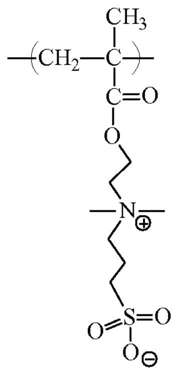

-(SPE)-

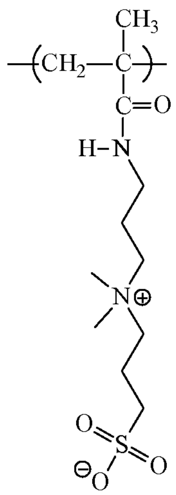

-(SPP)-

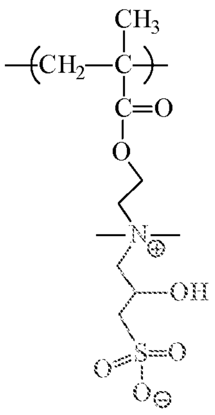

-(SHPE)-

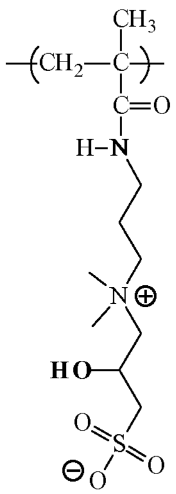

-(SHPP)-

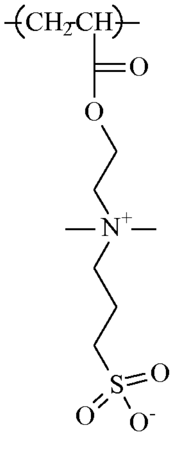

-(SPDA)-

A titre d'unités $A_Z$ on cite notamment les unités de type carboxybétaïne (comprenant un groupe carboxybétaïne) de formules suivantes:

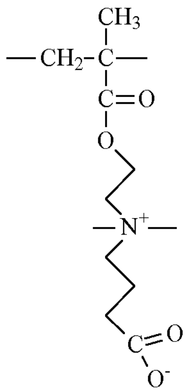

-(CPE)-

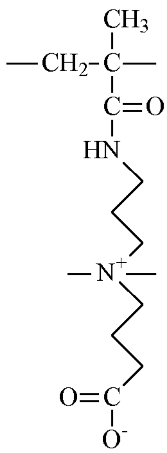

-(CPP)-

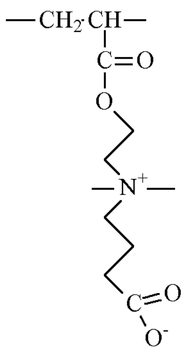

-(CPDA)-

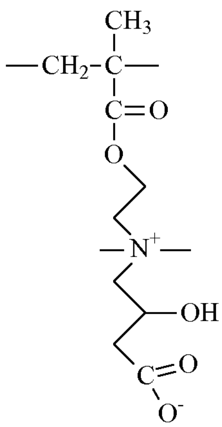

-(CHPE)-

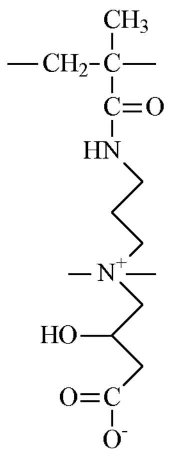

-(CHPP)-

Unités $A_{autre}$

La chaîne macromoléculaire A peut en outre comprendre des unités hydrophiles $A_{autre}$. Ces unités sont différentes des unités $A_Z$; elle ne comprennent pas de groupes bétaïne. Les unités $A_{autre}$ dérivent de monomères $A_{autre}$. Les unités $A_{autre}$ peuvent notamment comprendre:

- des unités $A_N$, neutres, dérivant de monomères $A_N$ neutres,
- des unités $A_C$, cationiques ou potentiellement cationiques, dérivant de monomères $A_C$ cationiques ou potentiellement cationiques,
- des unités $A_A$, anioniques ou potentiellement anioniques, dérivant de monomères AA anioniques ou potentiellement anioniques,
- des mélanges ou associations de telles unités.

Selon des modes de réalisation particuliers le copolymère est substantiellement dénué (il en comprend moins de 1% en moles, de préférence moins de 0,5%, de préférence pas du tout) des unités suivantes:

- les unités $A_C$, et/ou
- les unités $A_N$ choisies parmi
  - les unités alcoxylées de formule suivante:

    $$-CH_2-CHR^6[-X^2-(CH_2-CH_2-O)_n-R^7]-$$

    dans laquelle:

    - $R^6$ est un atome d'hydrogène ou un groupe méthyle,
    - $X^2$ est un groupe de formule -CO-O-, -CO-NH- ou $-C_6H_4-CH_2-$
    - n est un nombre entier ou moyen supérieur ou égale à 1,
    - $R^7$ est un atome d'hydrogène, un groupe alkyle ou un groupe tristyrylphenyl, et/ou

  - les unités hydroxylées de formule suivante:

    $$-CH_2-CHR^6[-X^2-R^8]-$$

    dans laquelle:

    - $R^6$ est un atome d'hydrogène ou un groupe méthyle,
    - $X^2$ est un groupe de formule -CO-O-, -CO-NH- ou $-C_6H_4-CH_2-$
    - $R^8$ est un groupe hydrocarboné à au moins deux atomes de carbone, comprenant au moins deux groupes -OH, de préférence sur deux atomes de carbone consécutifs, et/ou

  - les unités acrylates ou méthacrylates d'hydroxyalkyle.

Si le copolymère comprend des unités $A_{autre}$ hydrophiles, il s'agira de préférence d'unités neutres $A_N$, sans unités $A_A$ anioniques ou potentiellement et/ou sans unités $A_C$ cationiques ou potentiellement cationiques.

Unités $A_N$

Les unités $A_N$ sont des unités neutres hydrophiles. A titre d'exemples de monomères neutre hydrophiles $A_N$ dont peuvent dériver les unités $A_N$, on peut mentionner:

- les hydroxyalkylesters d'acides α-β éthyléniquement insaturés comme les acrylates et méthacrylates d'hydroxyéthyle, d'hydroxypropyle, le glycérol monométhacrylate...
- les amides α-β éthyléniquement insaturés comme l'acrylamide (AM), le méthacrylamide, le N-méthylolacrylamide, le diméthylacylamide, le diméthylméthacrylamide, ...
- les monomères α-β éthyléniquement insaturés portant un segment polyoxyalkyléné hydrosoluble du type polyoxyde d'éthylène, comme les polyoxyde le cas échéant statistique ou à blocs d'éthylène et/ou de propylène α-méthacrylates (BISOMER S20W, S10W, ... de LAPORTE) ou α,ω-diméthacrylates, ...
- les monomères α-β éthyléniquement insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique
- les vinyl-lactames comme la vinylpyrrolidone
- les monomères α-β éthyléniquement insaturés de type uréido et en particulier le méthacrylamido de 2-imidazolidinone éthyle éventuellement en mélange (Sipomer WAM II de RHODIA),
- leurs mélanges ou associations.

Unités $A_C$

Les unités $A_C$ sont des unités cationiques ou potentiellement cationiques comprenant au 1, 2, 3, ou plus groupes cationiques ou potentiellement cationiques, dans la chaîne formant le squelette du copolymère ou de préférence en position latérale par rapport à la chaîne formant le squelette du copolymère.

Les unités $A_C$ cationiques sont de préférence des unités comprenant au moins un groupe ammonium quaternaire. Les unités $A_C$ potentiellement cationiques peuvent être des unités comprenant au moins un groupe amine tertiaire.

A titre d'exemples de monomères potentiellement cationiques $A_C$ dont peuvent dériver les unités $A_C$ on peut mentionner:

- les N,N(dialkylaminoωalkyl)amides d'acides carboxyliques α-β monoéthyléniquement insaturés comme le N,N-diméthylaminométhyl -acrylamide ou -méthacrylamide, le 2(N,N-diméthylamino)éthyl-acrylamide ou - méthacrylamide, le 3(N,N-diméthylamino)propyl-acrylamide ou -méthacrylamide, le 4(N,N-diméthylamino)butyl-acrylamide ou -méthacrylamide
- les aminoesters α-β monoéthyléniquement insaturés comme le 2(diméthyl amino)éthyl acrylate (ADAM), 2(diméthyl amino)éthyl méthacrylate (DMAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

A titre d'exemples de monomères cationiques $A_C$ dont peuvent dériver les unités B, on peut mentionner:

- les monomères ammoniumacryloyles ou acryloyloxy comme

  - le chlorure de triméthylammoniumpropylméthacrylate,
  - le chlorure ou le bromure de triméthylammoniuméthylacrylamide ou méthacrylamide,
  - le méthylsulfate de triméthylammoniumbutylacrylamide ou méthacrylamide,
  - le méthylsulfate de triméthylammoniumpropylméthacrylamide (MES),
  - le chlorure de (3-méthacrylamidopropyl)triméthylammonium (MAPTAC),
  - le chlorure de (3-acrylamidopropyl)triméthylammonium (APTAC),
  - le chlorure ou le méthylsulfate de méthacryloyloxyéthyl triméthylammonium,
  - le chlorure d'acryloyloxyéthyl triméthylammonium ; ou le méthylsulfate d'acryloyloxyéthyl triméthylammonium

(ADAMQUAT Cl ou ADAMQUAT MeS),

- - le méthyle sulfate de méthyldiethylammonium éthyle acrylate (ADAEQUAT MeS),
- le chlorure ou méthyle sulfate de benzyldimethylammonium éthyle acrylate (ADAMQUAT BZ 80),
- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium (DADMAC) ;
- le chlorure de diméthylaminopropylméthacrylamide,N-(3-chloro-2-hydroxypropyl) triméthylammonium (DIQUAT chlorure),
- le methylsulfate de diméthylaminopropylméthacrylamide,N-(3-methylsulfate-2-hydroxypropyl)triméthylammonium (DIQUAT methylsulfate)
- le monomère de formule

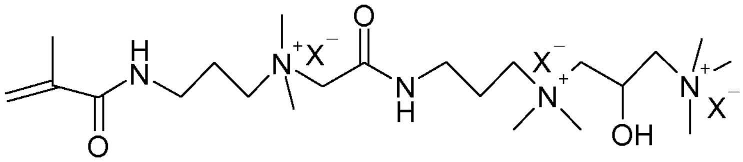

où $X^-$ est un anion, de préférence chlorure ou méthylsulfate.

A titre d'exemples de <u>monomères potentiellement cationiques</u> $A_C$ dont peuvent dériver les unités $A_C$:

- les N,N(dialkylaminoωalkyl)amides d'acides carboxyliques α-β monoéthyléniquement insaturés comme le N,N-diméthylaminométhyl
- acrylamide ou -méthacrylamide, le 2(N,N-diméthylamino)éthyl-acrylamide ou - méthacrylamide, le 3(N,N-diméthylamino)propyl-acrylamide ou -méthacrylamide, le 4(N,N-diméthylamino)butyl-acrylamide ou
- méthacrylamide
- les aminoesters α-β monoéthyléniquement insaturés comme le 2(diméthyl amino)éthyl acrylate (ADAM), 2(diméthyl amino)éthyl méthacrylate (DMAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

<u>Unités $A_A$</u>

A titre d'exemples de <u>monomères anioniques ou potentiellement anioniques $A_A$</u>, dont peuvent dériver des unités $A_A$ anioniques ou potentiellement anioniques, on peut mentionner :

- des monomères possédant au moins une fonction carboxylique, comme les acides carboxyliques α-β éthyléniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate ou une fonction acide correspondante, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle , l'acrylate ou le méthacrylate de sulfopropyle et leurs sels hydrosolubles
- des monomères possédant au moins une fonction phosphonate ou phosphate ou une fonction acide correspondante, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles.

Unités B

Les unités B sont des unités hydrophobes et/ou amphiphiles, pouvant constituer les groupemens B. Elles dérivent de monomères B. Il peut donc s'agir d'unités $B_{amphi}$ amphiphiles, d'unités $B_{phobe}$ hydrophobes, ou d'un mélange ou association de telles unités. Les unités $B_{amphi}$ dérivent de monomères amphiphiles $B_{amphi}$, les unités $B_{phobe}$ dérivent de monomères $B_{phobe}$.

Les monomères amphiphiles sont connus de l'homme du métier. Ils présentent une partie polymérisable, une partie hydrophile, et une ou plusieurs partie(s) hydrophobe(s). La partie polymérisable est généralement un groupe éthylèniquement insaturé. La partie hydrophile comprend généralement des motifs poly(ethoxy et/ou propoxy), de préférence polyethoxy, avec un nombre moyen de motifs ethoxy et/ou propoxy de préférence supérieur à 2 de préférence à 5, par exemple supérieur à 10. Si des groupes propoxy et ethoxy sont présents, ils peuvent être arrangés sous forme statistique ou sous forme de blocs. La partie hydrophobe peut être un groupe hydrocarboné comprenant au moins 3 atomes de carbone, par exemple un groupe alkyle, arylalkyle, alkaryle, arylalkylaryle ou (polyarylalkyl)aryle ou terpenyle. Le monomère peut notamment présenter des groupes de liaison entre les différentes parties, notamment un groupe -O-, ou -COO-, ou -CONH- ou au moins un groupe uréthane (dont les groupes dérivants d'isocyanates, notamment des groupes générés à partir d'isocyanates aromatiques comme le TDI). Des monomères amphiphiles utiles sont les monomères souvent désignés comme monomères tensioactifs.

A titre d'exemples de monomères amphiphiles $B_{amphi}$ dont peuvent dériver des unités $B_{amphi}$ on peut citer:

- les acrylates ou méthacrylates d'alcool aliphatiques en $C_3$-$C_{30}$ poly(éthoxylés et/ou propoxylés), dont la partie aliphatique est le cas échéant substituée par un ou plusieurs hydroxyle(s) de préférence en bout de groupe aliphatique, par exemple le SIPOMER BEM de RHODIA (méthacrylate de polyoxyéthylène ω-béhényle éventuellement en mélange), le SIPOMER HPM100 de RHODIA, le PLEX6877-O.
- les acrylates ou méthacrylate de polystryrylphenols poly(éthoxylés et/ou propoxylés), par exemple le SIPOMER SEM-25 de RHODIA (méthacrylate de polyoxyéthylène ω-tristyrylphényle),
- les acrylate ou méthacrylates d'alkylphenols poly(éthoxylés et/ou propoxylés).

A titre d'exemples de monomères hydrophobes $B_{phobe}$ dont peuvent dériver des unités $B_{phobe}$ on peut citer:

- les monomères vinylaromatiques tels que styrène, alpha-méthylstyrène, parachlorométhylstyrène, vinyltoluène...
- les halogénures de vinyle ou de vinylidène, comme le chlorure de vinyle, chlorure de vinylidène
- les $C_1$-$C_{30}$, de préférence $C_4$-$C_{22}$, alkylesters d'acides α-β monoéthyléniquement insaturés tels que les acrylates et méthacrylates de méthyle, éthyle, butyle, 2-éthylhexyle, isoactyle, lauryle, isodécyle, ou stéaryle
- les esters de vinyle ou d'alcool allylique d'acides carboxyliques saturés tels que les acétates, propionates, versatates, stéarates ... de vinyle ou d'allyle
- les nitriles α-β monoéthyléniquement insaturés contenant de 3 à 12 atomes de carbone, comme l'acrylonitrile, le methacrylonitrile ...
- les α-oléfines comme l'éthylène, le propylène ...
- les diènes conjugués, comme le butadiène, l'isoprène, le chloroprène,
- leurs mélanges ou associations.

Composition du copolymère

Le copolymère de l'invention peut présenter un rapport en moles entre les unités de la chaîne macromoléculaire A et les unités des groupements B compris entre 1/99 et 99,9/0,1, de préférence entre 1/99 et 99/1, notamment entre 50/50 et 99,9/0,1 ou 99/1. Ce rapport en moles est encore plus préférablement compris entre 80/20 et 99,9/0,1 ou 99/1. Il peut notamment être compris entre 90/10 et 99/1 ou entre 90/10 et 95/5. Les rapports en moles et les proportions de chaque type d'unités, chaînes ou groupements peuvent notamment être assimilés aux rapports et proportions en moles des monomères mis en oeuvre pour préparer les unités, chaînes ou groupements.

Selon un mode particulier de réalisation la chaîne macromoléculaire A ne comprend que des unités $A_Z$. Selon un mode particulier de réalisation, la chaîne macromoléculaire A comprend des unités $A_Z$ et des unités $A_A$ et/ou $A_C$, mais ne comprend substantiellement pas d'unités $A_N$ (c'est-à-dire au plus 1% en moles, de préférence au plus 0,5% en moles, de préférence au plus 0,1% en moles, et même 0%).

Selon un mode particulier de réalisation, la chaîne macromoléculaire A comprend des unités $A_Z$ et des unités $A_{autre}$, par exemple des unités $A_A$ et/ou $A_C$ et/ou $A_N$, notamment des unités $A_Z$ et $A_N$, avec un rapport en moles entre les unités $A_Z$ et le total des unités $A_{autres}$ compris entre 99/1 et 1/99, par exemple entre 90/1 et 10/90. Ce rapport peut notamment être compris entre 99/1 et 90/10, ou entre 90/10 et 80/20, ou entre 80/20 et 70/30, ou entre 70/30 et 60/40, ou entre 60/50 et 50/50, ou entre 50/50 et 40/60, ou entre 40/60 et 30/70, ou entre 30/70 et 20/80, ou entre 20/80 et

10/90, ou entre 10/90 et 1/99.

La masse molaire du copolymère peut par exemple être comprise entre 100000 et 10000000 g/mol, de préférence entre 200000 et 5000000 g/mol, par exemple ente 500000 et 3000000 ou 4000000 g/mol. L'indice de polydispersité peut être relativement élevé, par exemple supérieur à 3, ou même à 4 pour des copolymères de relativement hautes masses.

La masse molaire moyenne d'un segment de chaîne macromoléculaire A (entre deux groupements B) peut par exemple être supérieur à 50000 g/mol, de préférence à 100000 g/mol.

On mentionne que le copolymère peut se présenter sous toute forme pratique, par exemple sous forme solide, sèche ou sous forme vectorisée, par exemple sous forme d'une solution ou d'une émulsion ou d'une suspension, notamment sous forme d'une solution aqueuse. La forme vectorisée, par exemple une solution aqueuse, peut notamment comprendre de 5 à 50% en poids du copolymère, par exemple de 10 à 30% en poids. La solution aqueuse peut notamment être une solution obtenue par un procédé de préparation en phase aqueuse, notamment un procédé de polymérisation micellaire contrôlée. Elle peut comprendre certains des composés utilisés dans le procédé de préparation, notamment un tensioactif, généralement en quantité modeste.

Procédé de préparation

L'invention concerne notamment un procédé de préparation d'un copolymère comprenant:

- des unités $A_Z$ comprenant un groupe bétaïne, le groupe bétaïne comprenant un groupe cationique et un groupe anionique, et éventuellement d'autres unités hydrophiles $A_{autre}$, et
- au moins un groupement B d'unités B hydrophobes et/ou amphiphiles.

Le procédé est notamment approprié pour la préparation des copolymères tels que décrits ci-dessus. Le procédé peut constituer une description alternative des copolymères, on n'est donc pas être complètement lié à la description des copolymères décrits ci-dessus notamment en ce qui concerne leur architecture (manières donc sont réparties ou arrangées les différentes unités). Tout ce qui a été indiqué ci-dessus en ce qui les natures, les quantités, les rapports des unités pouvant être présentes dans le copolymère, ou en ce qui concerne les natures, les quantités et les rapports des monomères dont elles peuvent dériver, peut être appliqué au procédé de l'invention, et ne sera pas toujours repris ci-dessous. On note que si des monomères $A_Z$ précurseur sont utilisés, on peut appliquer lors du procédé les quantités et rapports en moles donnés pour les unités $A_Z$. Ce qui a été indiqué en ce qui concerne l'arrangement des unités dans le copolymère de l'invention peut être éventuellement appliqué au procédé de l'invention et ne sera pas toujours repris ci-dessous. Ce qui a été indiqué en ce qui concerne les masses moléculaires du ou dans le copolymère de l'invention peut être éventuellement appliqué au procédé de l'invention et ne sera pas toujours repris ci-dessous.

Ainsi le procédé de l'invention est un procédé comprenant les étapes suivantes:

a) on prépare un fluide aqueux B

- le fluide aqueux B comprenant:
    - au moins un monomère B éthylèniquement insaturé, hydrophobe ($B_{phobe}$) et/ou amphiphile ($B_{amphi}$), et
    - éventuellement un tensioactif,
    - à la condition que si le monomère B est un monomère hydrophobe $B_{phobe}$, alors le fluide aqueux B comprend un tensioactif,
- le monomère B étant compris dans des micelles de tensioactif et/ou de monomère amphiphile $B_{amphi}$
- avec au moins une des conditions suivantes:
    - le nombre $n_H$ de monomères dans les micelles est supérieur à 2,6, de préférence supérieur ou égal à 3, de préférence supérieur ou égal à 5, de préférence supérieur ou égal à 10, et/ou
    - le rapport en moles entre le tensioactif, et le monomère B est inférieur ou égal à 28, de préférence inférieur ou égal à 20, de préférence inférieur ou égal à 15, de préférence inférieur ou égal à 10, de préférence inférieur ou égal à 7, et/ou
    - le rapport en poids entre le tensioactif, s'il est présent, et le monomère B est inférieur ou égal à 30, de préférence inférieur ou égal à 20, de préférence inférieur ou égal à 15, de préférence inférieur ou égal à 10, de préférence inférieur ou égal à 7,

b) on polymérise par mise en présence en milieu aqueux:

- des micelles du fluide aqueux B,
- de monomères $A_Z$ ou $A_{Z\ précurseur}$ et éventuellement d'autres monomères hydrophiles $A_{autre}$ ces monomères étant en solution dans le milieu aqueux, les monomères $A_Z$ étant des monomères comprenant un groupe bétaïne, les monomères $A_{Z\ précurseur}$ étant des monomères comprenant un groupe susceptible d'être utilisé pour former des groupes bétaïne $A_Z$ par une réaction subséquente à la polymérisation, et
- d'une source de radicaux libres, et

c) éventuellement, si des monomères $A_{Z\ précurseur}$ ont été mis en oeuvre lors de l'étape b), on fait réagir les unités dérivant de ces monomères de manière à former des groupes bétaïne $A_Z$.

Un tel procédé est un procédé de type polymérisation micellaire contrôlée. La présence de micelles peut être déterminée de manière connue de l'homme du métier.

On note que dans le procédé, si des monomères B amphiphiles ($B_{amphi}$) sont mis en oeuvre en l'absence de tensioactif, alors ceux-ci peuvent être considérés comme à la fois des monomères et des tensioactifs, les rapports tensioactif/monomère étant alors considérés comme étant égaux à 1 (si le monomère $B_{amphi}$ est utilisé en l'absence de tensioactif), ou inférieur à 1 (si le monomère $B_{amphi}$ est utilisé en présence de tensioactif).

Les procédés de polymérisation micellaire contrôlée, sont connus de l'homme du métier. En particulier la polymérisation de l'étape b) peut être opérée de toute manière connue de l'homme du métier. On peut varier en particulier la source de radicaux libres, la quantité de radicaux libre, les phases d'introductions des différents composés et fluides, la température de polymérisation, et d'autres paramètres ou conditions opératoires de manière connue et appropriée. On donne quelques détails ou indications plus bas.

Selon un mode de réalisation particulier, le procédé comprend une polymérisation de précurseurs des unités $A_Z$ puis une étape c) de modification post-polymérisation. De tels processus sont connus de l'homme du métier. Certains ont été mentionnés ci-dessus, dans la partie qui concerne les unités $A_Z$.

On pense que, lors du procédé de polymérisation micellaire contrôlée, une polymérisation radicalaire des monomères hydrosolubles (monomères A) se produit dans la phase aqueuse, formant des chaînes macromoléculaires comprenant des unités dérivant des monomères A hydrosolubles, portant des radicaux libre propageant en bout de chaîne. On pense que ces radicaux libres rencontrent, de manière aléatoire et/ou statistique, les micelles et que alors la réaction de polymérisation continue avec les monomères de la micelle, puis continue ensuite avec les monomères hydrosolubles de la phase aqueuse. On pense que lorsque la polymérisation atteint la micelle, elle polymérise statistiquement tous ou une partie des monomères de la micelles avant de re-propager dans la phase aqueuse, formant ainsi des groupements d'unités dérivant des monomères compris dans les micelles (monomères B) au sein de chaînes macromoléculaires A des monomères hydrosolubles. On pense donc que le nombre d'unités dans les groupements est sensiblement égal (ou dans une marge de $\pm 25\%$ en nombre, ou même de $\pm 10\%$ en nombre), en moyenne, au nombre de monomères compris dans la micelle. Ainsi, on pense que si un grand nombre de monomères est compris dans la micelle, alors les groupements comprendront un grand nombre d'unités. On pense et on a trouvé, notamment, de manière surprenante, que ceci a une influence significative sur les propriétés des copolymères. La taille des micelles d'un tensioactif et donc la capacité des micelles à comprendre des quantités plus ou moins importantes de monomères hydrophobes est liée notamment à la quantité du tensioactif. On pense et on a trouvé, notamment, de manière surprenante, que plus le rapport tensioactif/monomère B est faible, plus la quantité de monomère B compris dans les micelles est importante, et/ou plus le nombre d'unités B dans des groupements B est important, et/ou plus le copolymère présente des effets en matière de propriétés rhéologiques qui sont intéressants. Ceci peut notamment être traduit en terme de procédé et/ou de structure par le nombre $n_H$ défini ci-dessus. On a notamment trouvé que la mise en oeuvre de monomères B amphiphiles, et/ou la présence d'unités B amphiphiles, procure des effets en matière de propriétés rhéologiques qui sont intéressants. On mentionne que si des monomères B amphiphiles sont mis en oeuvre, ceux-ci peuvent avoir une contribution dans la formation d'une micelle. Si on ne leur associe pas de tensioactif ils peuvent auto-former des micelles. Si on leur associe un tensioactif, ils peuvent participer à la micellisation (co-micellisation avec le tensioactif) et/ou simplement entrer dans la micelle. Dans le cas où des monomères B amphiphiles ($B_{amphi}$) sont mis en oeuvre, on peut déterminer un nombre $n_H$ en évaluant le nombre de d'agrégation et la concentration micellaire critique de l'association du tensioactif et de monomère $B_{amphi}$ par les techniques de la littérature. De préférence, dans le mode de réalisation où des monomères B amphiphiles sont mis en oeuvre et/ou dans le cas où des unités $B_{amphi}$ sont présentes dans le copolymère, les conditions relatives au nombre $n_H$ avec ces monomères ou unités, seuls ou associés à un tensioactif, sont vérifiées (en comptant le monomère amphiphile comme tensioactif et aussi comme monomère).

Le procédé de l'invention peut être un procédé de type discontinu ("batch" en anglais), de type semi-continu ("semi-batch" en anglais) ou même de type continu. Un procédé de type semi-continu comprend typiquement une phase d'introduction progressive d'au moins un monomère (comonomère), de préférence de tous les monomères (comonomères), dans un réacteur, sans sortie continue du produit de réaction, le produit de réaction, comprenant le polymère, étant récupéré en une fois en fin de réaction.

L'étape b) peut être mise en oeuvre de manière discontinue, semi-continue ou même continue. L'étape a) peut être mise en oeuvre de manière discontinue, semi-continue ou même continue. Si l'étape b) est de type semi-continu et ou continu, alors l'étape a) peut être mise en oeuvre de manière discontinue (avec un stockage), de manière semi-continue (le cas échéant avec des phases de stockage avant introduction dans le milieu de polymérisation), ou de manière continue (préparation suivie directement d'une introduction dans le milieu de polyérisation).

On peut notamment opérer de l'une des manières suivantes:

- étape a) discontinue, et
- étape b) discontinue,

ou

- étape a) continue ou semi-continue, et
- étape b) semi-continue,

ou

- étape a) discontinue, et
- étape b) semi-continue.

Les procédés où l'étape b) est mise en oeuvre de manière semi-continue, en particulier avec une étape a) discontinue, s'avèrent particulièrement efficace et appropriée. Ils permettent notamment d'améliorer la régularité de la composition du copolymère et/ou d'éviter des dérives de composition, notamment en fin de réaction.

Par exemple l'étape b) peut comprendre les étapes suivantes:

b1) on prépare une solution aqueuse A comprenant les monomères $A_Z$ ou $A_{Z\ précurseur}$, et éventuellement un sel,
b2) on met en présence, au moins une partie de la solution aqueuse A, au moins une partie du fluide aqueux B et au moins une partie de la source de radicaux libres, pour former un mélange réactionnel,
b3) on polymérise en générant des radicaux libres dans le mélange réactionnel, de préférence par chauffage,
b4) le cas échéant, on ajoute au mélange réactionnel les parties restantes de la solution aqueuse A et/ou du fluide aqueux B, et/ou de la source de radicaux libre, chacun pouvant être ajouté en une fois, ou de manière continue. Dans la présente demande le terme "continu" couvre des introductions graduelles (introductions ponctuelles régulières sur un temps donné) ou progressives (introduction progressive sans arrêt sur un temps donné).

Il est à noter que certaines des étapes parmi l'étape a) ou les étapes b1), b2), b3) peuvent être effectuées de manière simultanée. Ainsi la polymérisation de l'étape b3) se poursuit lors de l'étape b4) s'il y en a une. On indique qu'on peut mettre en oeuvre les étapes a) et b1) simultanément, de manière séparée.

Les étapes b2), b3) et b4) peuvent être opérées dans un dispositif appelé réacteur.

Lors de l'étape b2) on peut notamment introduire la totalité de la solution aqueuse A et/ou la totalité du fluide aqueux B, et/ou la totalité de la source de radicaux libres. On préfère ne pas introduire la totalité du fluide aqueux B, et introduire celui-ci de manière continue. On préfère ne pas introduire la totalité de la solution aqueuse A, et introduire celle-ci de manière continue.

Lors de l'étape b2) on met en présence une source de radicaux libre avec au moins une partie des monomères de la solution aqueuse A et au moins une partie du fluide aqueux B. La source de radicaux libre (la totalité ou une partie) peut avoir été préalablement introduite dans la solution aqueuse A et/ou dans le fluide aqueux B. Alternativement la source de radicaux libre (la totalité ou une partie) peut avoir été introduite dans le réacteur où sont mis en présence la solution aqueuse A et le fluide aqueux B, indépendamment de la solution aqueuse A (totalité ou partie) et du fluide aqueux B (totalité ou partie), lors par exemple de la constitution d'un pied de cuve.

On note que la solution aqueuse A, et le fluide aqueux B, peuvent être pré-mélangés avant la mise en présence avec la source de radicaux libres. On peut notamment préparer séparément le fluide aqueux B et la solution aqueuse A puis les mélanger. Il n'est pas exclu toutefois d'ajouter les monomères A au fluide aqueux B ou de mélanger tous les ingrédients du prémélange ensemble (dans ce cas le fluide aqueux B et la solution aqueuse A se confondent). Selon un mode de réalisation on peut lors de l'étape b2) mettre en présence une partie du pré-mélange avec la source de radicaux libres (totalité ou partie) et introduire le reste du pré-mélange lors d'une étape b4).

On détaille ci-dessous quelques séquences qui peuvent être mises en oeuvre.

Selon une séquence de type discontinu on peut opérer de la manière suivante:

i) on prépare le fluide aqueux B (étape a)

ii) on prépare la solution aqueuse A (étape b1)
iii) on mélange le fluide aqueux B et la solution aqueuse A et on introduit la totalité dans le réacteur (le mélange peut être effectué dans le réacteur)
iv) on ajoute la source de radicaux libres, de préférence un amorceur partiellement soluble (étape b2).
v) on polymérise en chauffant (étape b3).

On note qu'on peut commencer à chauffer avant l'ajout de la source de radicaux libres.
Selon une autre séquence de type discontinu on peut opérer de la manière suivante:

i) on réalise dans le réacteur un pied de cuve comprenant la source de radicaux libre, avec de préférence de l'eau,
ii) on prépare le fluide aqueux B (étape a)
iii) on prépare la solution aqueuse A (étape b1)
iv) on mélange le fluide aqueux B et la solution aqueuse A et on introduit la totalité dans le réacteur (le mélange peut être effectué dans le réacteur) (étape b2)
iv) on polymérise en chauffant.

Selon une séquence de type semi discontinu on peut opérer de la manière suivante:

i) on prépare le fluide aqueux B (étape a)
ii) on prépare la solution aqueuse A (étape b1)
iii) on mélange le fluide aqueux B et la solution aqueuse A pour obtenir un pré-mélange (on peut alternativement préparer le pré-mélange directement, en omettant l'étape i) et/ou l'étape ii))
iv) on réalise dans le réacteur un pied de cuve comprenant une partie du pré-mélange, et la source de radicaux libre, avec de préférence de l'eau
v) on initie la polymérisation en chauffant
vi) on ajoute de manière continue le reste du pré-mélange, en chauffant, de manière à poursuivre la polymérisation,

la source de radicaux libre étant introduite dans le pré-mélange (étape iii) ou séparément, en totalité ou en partie, dans le pied de cuve (étape iv), le reste étant éventuellement introduit lors de l'étape vi).
On note que alternativement au pré-mélange on peut introduire la solution aqueuse A et le fluide aqueux B séparément (la source de radicaux libres pouvant notamment être introduite alors dans le fluide aqueux B et/ou dans la solution aqueuse A, si cette dernière est introduite dans le pré-mélange).
Selon une autre séquence de type semi discontinu on peut opérer de la manière suivante:

i) on prépare le fluide aqueux B (étape a)
ii) on prépare la solution aqueuse A (étape b1)
iii) on mélange le fluide aqueux B et la solution aqueuse A pour obtenir un pré-mélange (on peut alternativement préparer le pré-mélange directement, en omettant l'étape i) et/ou l'étape ii))
iv) on réalise dans le réacteur un pied de cuve comprenant de l'eau, et éventuellement du tensioactif (celui-ci peut contribuer à conserver les micelles du fluide aqueux B lors du premier ajout dans le réacteur),
v) on ajoute de manière continue le pré-mélange, en chauffant, de manière à polymériser,

la source de radicaux libre étant introduite dans le pré-mélange, ou séparément, en totalité ou en partie, dans le pied de cuve (étape iv), le reste étant éventuellement introduit lors de l'étape v).
On note qu'on peut commencer à chauffer avant l'introduction du pré-mélange.
On note que alternativement au pré-mélange on peut introduire la solution aqueuse A et le fluide aqueux B séparément (la source de radicaux libres pouvant notamment être introduite alors dans le fluide aqueux B et/ou dans la solution aqueuse A, si cette dernière est introduite dans le pré-mélange).

Tensioactifs

Tout tensioactif susceptible de former les micelles dans de l'eau peut être utilisé. La lise en oeuvre du tensioactif est particulières utile à la formation de micelles si les monomères B sont uniquement des monomères hydrophobes $B_{phobe}$. Le tensioactif est généralement utilisé, en particulier pour la polymérisation en l'absence de monomères $B_{amphi}$, à concentration supérieure à la concentration micellaire critique. On peut notamment utiliser au moins un tensioactif anionique, non ionique, amphotère (dont zwitterionique), cationique, ou un mélange ou une association de ceux-ci. On peut de préférence utiliser des tensioactifs anioniques ou non ioniques.
On peut notamment mettre en oeuvre les tensioactifs anioniques classiques choisis parmi notamment les

alkylsulfates, tels que le sodium lauryl sulfate, les alkylsulfonates, les alkylarylsulfates, les alkylarylsulfonates tels que le sodium dodécylbenzène sulfonate, les arylsulfates, les arylsulfonates, les alkyléthoxylés, les alkylaryl éthoxylés, les alkyl éthoxylés ou les alkylaryl éthoxylés sulfatés ou phosphatés ou leurs sels, les sulfosuccinates, les alkylphosphates de métaux alcalins, les sels de l'acide abiétique hydrogénés ou non, ou les sels d'acide gras comme le stéarate de sodium.

On peut notamment mettre en oeuvre les tensioactifs anioniques classiques choisi parmi notamment les alcools éthoxylés et/ou propoxylés, les acides gras éthoxylés et/ou propoxylés, les copolymères à blocs de polyoxyde d'étylène et de polyoxyde de propylène...

On note que le milieu réactionnel peut notamment comprendre un sel, organique ou inorganique. Celui-ci peut par exemple être introduit dans la solution aqueuse A. Le sel peut faciliter le maintien en solution du copolymère obtenu, en particulier s'il présent une haute masse molaire, ou d'améliorer le maintien et/ou l'introduction des monomères B (en particulier $B_{phobe}$) dans les micelles. A titre de sels pouvant être utilisés, on cite notamment sels dont le cation est un métal alcalin, un métal alcalino-terreux, ou un ammonium (par exemple $NH_4^+$), et dont l'anion est un halogène, un phosphate, un sulfate, oxyde d'azote. On cite par exemple le chlorure de sodium ou le sulfate de sodium ou le sulfate d'ammonium.

Polymérisation

Toute source de radicaux libres peut être utilisée. On peut notamment générer des radicaux libres spontanément par exemple par élévation de la température, avec des monomères appropriés comme le styrène (monomère B). On peut générer des radicaux libres par irradiation, notamment par irradiation UV, de préférence en présence d'initiateurs appropriés sensibles aux UV. On peut utiliser des initiateurs (ou "amorceurs") ou des systèmes d'initiateurs, de type radicalaire ou redox. La source de radicaux libre peut être hydrosoluble ou non. On pourra de préférence utiliser des amorceurs hydrosolubles, ou au moins partiellement hydrosolubles (par exemples hydrosolubles à au moins 50% en poids).

De manière générale, plus la quantité de radicaux libres est élevée, plus la polymérisation est initiée facilement (elle est favorisée), mais plus les masses moléculaires des copolymères obtenus sont faibles.

On peut notamment utiliser les initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, des sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

La température de polymérisation peut notamment être comprise entre 25°C et 95°C. La température peut dépendre de la source de radicaux libre. S'il ne s'agit pas d'une source de type amorceur UV, on préférera opérer entre 50°C et 95°C, plus préférablement entre 60°C et 80°C. De manière générale, plus la température est élevée, plus la polymérisation est initiée facilement (elle est favorisée), mais plus les masses moléculaires des copolymères obtenus sont faibles.

Utilisations - Compositions

Le copolymère de l'invention peut avantageusement être utilisé dans une composition aqueuse. L'invention concerne aussi les compostions, de préférence aqueuses, comprenant le copolymère. Dans les compositions aqueuses,

il peut être utilisé comme agent de modification de la rhéologie, par exemple comme agent épaississant. Le copolymère permet ainsi notamment d'augmenter la viscosité des compositions.

La composition aqueuse peut en outre comprendre des espèces ioniques comme des sels inorganiques ou des sels organiques, notamment des sels d'acides, lesdits sels pouvant présenter un caractère tensioactif ou non tensioactif. Il peut notamment s'agir d'une composition dite saline. Le copolymère permet notamment d'augmenter la viscosité de composition comprenant des ions, notamment de compositions salines, notamment de compositions de force ionique relativement élevée, notamment de compostions comprenant des quantités relativement importantes de sels, notamment de compositions à base d'eau de mer ou de saumures.

La force ionique de la composition peut être de faible à élevée selon l'application. On a trouvé que le copolymère pouvait être efficace comme agent épaississant à force ionique nulle ou faible, et qu'il pouvait de manière surprenante demeurer efficace à force ionique élevée. La force ionique peut par exemple être d'au moins 0,7 mol/L, voir d'au moins 1 ou même 2 mol/L. La composition peut notamment comprendre au moins 35 g/L d'un sel.

La composition peut notamment comprendre au moins un tensioactif, par exemple un tensioactif mis en oeuvre lors de la préparation du copolymère. La quantité de tensioactif peut être la quantité introduite avec le copolymère si un tensioactif a été utilisé lors de la préparation de ce dernier. Il n'est toutefois pas exclu d'en ajouter. De préférence la composition comprend au moins 0,001%, avantageusement au moins 0,01% ou 0,1%, en poids de tensioactif, par rapport au copolymère.

La quantité totale de tensioactif comprise dans la composition peut notamment varier selon l'usage de la composition. Celle-ci peut aller des valeurs indiquées ci-dessus à environ 20%, par exemple typiquement de 5% à 15% ou 20% pour des compositions détergentes, notamment des compositions pour le soin du corps destinées à être rincées comme des shampooings et/ou des gels-douche.

Les sels compris dans la composition peuvent notamment être des sels de métaux, en particulier de métaux alcalins ou alcalino-terreux, monovalents, divalents ou multivalents, selon les valences disponibles pour lesdits métaux. Il peut par exemple s'agir de NaCl, et/ou de NaBr, et/ou de CaCl2 et/ou de CaBr2 et/ou de ZnBr2, et/ou de manière générale de saumures plus ou moins complexes. La composition peut notamment être une composition d'eau de mer ou d'une saumure comprenant le copolymère.

La quantité en poids de copolymère dans les compositions peut dépendre comportement rhéologique souhaité et/ou de la force d'épaississement souhaitée pour les compositions, et de la présence éventuelle d'autres composés, notamment des composés ioniques comme les sels. En pratique la quantité en poids pourra notamment être supérieure à 0,01% en poids par rapport à la composition par exemple supérieure à 0,1% en poids, et souvent supérieure ou égale à 0,5% ou 1%. La quantité sera généralement inférieure ou égale à 20% en poids, de préférence à 10%. Des épaississements intéressants peuvent notamment être observés dans des gammes de 0,5% à 1% en poids, et/ou de 1% à 2%, et/ou de 2% à 3% et/ou de 3% à 4% et/ou de 4% à 5%.

La composition peut notamment être:

- un fluide utilisé pour l'extraction de pétrole et/ou de gaz,
- un fluide utilisé dans les travaux publics, notamment pour des opérations d'excavation et/ou de creusement,
- une composition pour les soins ménagers, notamment un produit de consommation destiné à être mis en oeuvre dans la sphère privée, ou un produit à destination industrielle et/ou institutionnelle généralement destiné à être mis en oeuvre par des services de nettoyage, par exemple une composition de nettoyage des textiles (lessive pour machine ou pour le nettoyage à la main), ou une composition pour le nettoyage de la vaisselle en machine ou à la main,
- une composition cosmétique, de préférence destinée à être rincée, comme un shampooing, un après shampooing destiné à être rincé, et/ou un gel-douche.

Dans les compositions pour les soins ménagers ou dans les compositions cosmétiques notamment, le copolymère peut procurer une viscosité, et/ou des propriétés d'écoulement et/ou une texture appréciées des consommateurs. Dans des compositions cosmétiques à phases de tensioactifs structurées, le copolymère peut procurer une sur-viscosité intéressante.

On mentionne enfin que le fluide peut être utilisé en tant que fluide pour l'évacuation de produits d'excavation, notamment dans les secteurs de la construction en zones profondes, de la réalisation de tunnels ou de puits, dans les travaux publics et/ou dans l'exploitation de gisement et pétrole et/ou de gaz, ou dans le secteur minier. Les produits d'excavation sont dans ces applications mis en suspension dans le fluide, par introduction du fluide dans la zone d'où ils doivent être éliminés. Le document US5439317 donne des exemples d'applications d'excavations.

Les compositions, quel que soit le domaine d'utilisation, peuvent comprendre des particules liquides (gouttelettes émulsifiées) ou solides, dispersées. Des particules liquides peuvent par exemple être des huiles, synthétiques (par exemple des huiles silicone) ou d'origine végétale ou minérale. Les particules solides peuvent notamment être du sable, des particules modifiant la densité, des gravats, et/ou des particules polymériques. Le copolymère peut favoriser la suspension de ces particules pendant le temps nécessaire pour l'utilisation de la composition et/ou pendant un temps

de stockage. Il peut également ou alternativement contribuer à un transport aisé des particules, pour les placer ou les déplacer en un endroit approprié.

On mentionne que la composition peut avoir une température allant de 20°C à des températures relativement élevées, par exemple supérieures ou égales à 50°C, notamment supérieures ou égales 70°C, notamment supérieures ou égales à 100°C, notamment supérieures ou égales à 150°C, ou même supérieures ou égales à 180°C. La pression peut être la pression atmosphérique ou un pression supérieure. La température et la pression peuvent varier en fonction de l'utilisation qui est faite du fluide et de son environnement. Le copolymère, peut rester efficace des dans conditions exigeantes à températures relativement élevées, notamment dans les domaines de l'extraction de pétrole et/ou de gaz. Ainsi la composition peut être mise en oeuvre aux températures mentionnées ci-dessus.

Le fluide utilisé pour l'extraction de pétrole et/ou de gaz peut notamment être:

- un fluide de forage,
- un fluide de complétion,
- un fluide de fracturation,
- un fluide de mise en place de drains de gravier ("Gravel packing" en Anglais),
- un fluide de production,
- un fluide de récupération assistée des hydrocarbures ("Enhanced Oil Recovery" en Anglais).

De tels fluides, et les opérations associées, sont connus de l'homme du métier. On note que le copolymère peut être introduit dans le fluide par mélange à une composition hors de la formation, ou qu'il peut être introduit préalablement dans la formation, puis être mis en présence d'une composition dans la formation et/ou dans le puits, le cas échéant progressivement, notamment par des techniques de compression dans la formation et/ou dans le fond du puits (techniques dites de "squeeze treatments" en Anglais). Après la compression, le copolymère peut être relargué progressivement dans un fluide en circulation.

Dans le cas de fluides de récupération assistée des hydrocarbure, le copolymère peut contribuer à procurer au fluide une viscosité et/ou une rhéologie, dans les conditions de température, de pression, et d'environnement chimique de la formation exploitée, appropriée pour pousser les hydrocarbures hors de la formation. Il peut ainsi améliorer l'efficacité de balayage, par exemple en évitant et/ou en retardant la formation de chemins préférentiels d'écoulement dans le formation. Le copolymère présente par ailleurs une stabilité chimique adaptée à cette utilisation.

Dans le cadre des fluides de fracturation ou de mise en place de drains de graviers ("gravel packing"), le contrôle de la rhéologie des fluides peut permette d'assurer d'une part le transport de particules (par exemple du sable, des céramiques, des particules des polymères par exemple à base de polyamide, des graviers) en évitant leur sédimentation. Dans ce cadre une viscosité de l'ordre de 100cP à un cisaillement de 100s-1 et/ou un seuil découlement peuvent être obtenus.

On donne ci-dessus quelques détails complémentaires quant aux compositions (fluides) pouvant être mis en oeuvre dans le cadre de l'extraction de pétrole et/ou de gaz, et quant aux opérations associées.

Les fluides, notamment les fluides de fracturation, peuvent comprendre au moins un gaz tel que l'air, l'azote, le dioxyde de carbone. Ils peuvent aussi comprendre des gaz liquéfiés comme du dioxyde de carbone liquide.

L'utilisation du copolymère de l'invention peut être intéressante dans un fluide de fracturation, et plus particulièrement avantageuse à des températures d'exploitation relativement élevées, de l'ordre de 120°C à 150°C. Le pH est généralement de 8 à 10, et souvent supérieur à 9. On n'observe pas, avec un fluide comprenant le copolymère, de dégradations importantes et/ou rapides des propriétés rhéologiques, notamment de la viscosité et/ou de propriétés visco-élastiques, qui pourraient rendre ledit fluide difficilement utilisable. L'opération de fracturation peut avantageusement être une fracturation avec du dioxyde de carbone, dans laquelle on injecte du dioxyde de carbone liquide dans le fluide de fracturation. L'utilisation en tant que fluide de fracturation peut avantageusement être une utilisation en tant que fluide de fracturation avec du dioxyde de carbone, le fluide comprenant du dioxyde de carbone liquide.

L'utilisation d'un fluide de fracturation consiste à injecter le fluide dans le puits à un débit, une pression et un taux de cisaillement suffisants pour créer des fissures dans les roches traversées, et ainsi augmenter la perméabilité des roches comprenant le pétrole ou le gaz.

Des techniques de fracturation sont notamment décrites dans le brevet US 5,551,516, et dans « Oilfield Applications », Encyclopedia of Polymer Science and Engineering, vol. 10, pp 328-366.

Le fluide de fracturation comprend en général des particules solides dont le rôle est de maintenir ouvertes les fissures créées lors de l'opération de fracturation. Les particules sont dispersées, par exemple en suspension, dans le fluide, transportées dans les fissures. Elles empêchent celles-ci de se refermés lorsque la pression diminue dans la roche, à cause d'une dégradation, subie ou provoquée, de viscosité du fluide, ou à cause d'une opération volontaire sur le débit, la pression ou le taux de cisaillement.

Plus particulièrement, ces particules solides peuvent être choisies parmi le sable, le quartz, le quartz siliceux, la bauxite frittée, les perles de verre, les perles de céramique, les particules d'aluminium, des fragments de coquilles

de noix, les particules de polymères, en particulier de polymère thermoplastiques, pas exemple des particules à base de polyamide. La granulométrie de ces particules est typiquement de 20-40 mesh. Usuellement, la quantité de particules solides dans le fluide est comprise entre 0,05kg et 0,5kg, par exemple entre 0,2kg et 0,3kg, de particules par litre de fluide de fracturation.

Il est à noter que les fluides de fracturation peuvent comprendre des agents stabilisants thermiques (thermal stabilizing agents), comme par exemple les thiosulfates et thiosulfites de sodium, la thiourée, le méthanol, l'éthylène glycol, l'isopropanol, etc.

Le cas échéant, le fluide de fracturation peut comprendre un additif limitant le gonflement des argiles, comme par exemple, le chlorure de potassium, le chlorure de calcium, le sulfate de calcium (gypse) etc. Généralement, la teneur en ce type de composés, lorsqu'ils sont présents, est comprise entre 1 et 4 % en poids du fluide.

Le fluide de fracturation peut bien entendu comprendre d'autres éléments usuellement utilisés dans le domaine, tels que antimousse ou des inhibiteurs de tartre.

L'utilisation du copolymère peut être intéressante dans un fluide de forage, en particulier dans le domaine de l'exploitation de gisements de pétrole ou de gaz.

Outre le copolymère les fluides de forage peuvent comprendre des agents fluidifiants ou dispersants.

Ainsi, peuvent entrer dans la composition des fluides de forages, des polyphosphates, des tannins, des lignosulfonates, des dérivés de lignine, des tourbes et lignites, des polyacrylates, des polynaphtalène sulfonates, seuls ou en mélange.

La quantité d'agent fluidifiant ou dispersant est variable. A titre indicatif, celle-ci peut être comprise entre 0 et 1% par rapport au poids du fluide.

Le fluide de forage peut de plus comprendre au moins un réducteur de filtrat. Il s'agit de composés s'adsorbant sur les roches constituant les parois du puits, limitant de ce fait la diffusion à travers les parois du forage des divers éléments constitutifs du fluide. A titre d'exemples de composés de ce type, on peut citer sans intention de s'y limiter, les composés cellulosiques, les polyacrylamides, les polyacrylates de haut poids moléculaire, les succinoglycanes, l'amidon natif ou ses dérivés, le charbon. Parmi les composés cellulosiques, les celluloses non modifiées ou modifiées chimiquement comme les carboxyméthylcelluloses, les hydroxyéthylcelluloses, les carboxyéthyl-hydroxyéthylcelluloses sont des composés convenant comme réducteur de filtrat. Bien entendu rien n'empêche d'employer ces produits en combinaison si les conditions le rendent nécessaire. La quantité de réducteur de filtrat dépend généralement de la nature des roches traversées. Cependant, à titre indicatif, celle-ci peut être comprise entre 0 et 1% par rapport au poids total du fluide. Le fluide de forage peut comprendre un capteur d'oxygène. Ce type d'additif a pour objet de piéger l'oxygène présent dans les boues de forages et qui peuvent entraîner une dégradation de certains additifs. Parmi les produits de ce type, on peut citer par exemple les hydroxylamines, l'hydrazine, les sulfites, les bisulfites, les hydrosulfites. De préférence, on utilise de l'hydrazine, qui peut être sous une forme anhydre ou hydratée, sous forme de sels comme par exemples les chlorure, sulfate, ou encore sous forme de carbohydrazide. Généralement la teneur en additif de ce type varie entre 0 et 0,25% en poids du fluide.

Le fluide de forage peut comprendre de plus, au moins un composé alourdissant et/ou au moins un colloïde minéral. Les éléments alourdissants contribuent à maintenir une pression hydrostatique suffisante dans le puits et à maintenir en suspension les roches entraînées lors de l'opération de forage. De tels composés sont classiquement choisis parmi les sels solubles précédemment cités et les sels peu ou très peu solubles. Parmi les sels peu solubles, on peut citer sans intention de s'y limiter, les sulfates, silicates ou carbonates de métaux alcalino-terreux, comme le sulfate de baryum, le carbonate de calcium. On peut de même utiliser des bromures de métaux alcalino-terreux ou de zinc tels que le bromure de potassium, le bromure de zinc. On peut aussi utiliser des oxydes ou sulfure ou sous arséniate de fer. On peut également utiliser le sulfate de strontium, voire dans certains cas de forte densité du Galene (sulfure de plomb).

Les colloïdes minéraux, qui sont des composés substantiellement insolubles dans les conditions d'utilisation du fluide selon l'invention, sont des agents modifiant la rhéologie du milieu et permettant de maintenir les déblais en suspension dans ce dernier. L'attapulgite, la baryte, la bentonite, seules ou en mélange, en sont les exemples les plus couramment utilisés. Il est à noter que si l'on met en oeuvre un fluide comprenant un colloïde minéral, ce dernier sera de préférence de l'attapulgite.

Les teneurs en alourdissants et en colloïdes minéraux dépendent de plusieurs facteurs qui ne sont pas uniquement techniques. En effet, si ces teneurs sont bien évidemment fixées en fonction de la nature des sols traversés, l'importance du coût engendré par l'usage de ces additifs est prise en compte (présence sur place ou non, coût, etc.).

On peut également ajouter au fluide de forage, si nécessaire, des sels minéraux pour favoriser la précipitation de certains ions, s'ils sont présents, et en particulier des ions divalents. On peut mentionner par exemple l'addition de carbonate de soude pour précipiter le calcium, ou le bicarbonate de soude pour précipiter la chaux, notamment lors de reforages dans le ciment. On peut encore citer l'addition de gypse ou de chlorure de calcium pour limiter le gonflement des argiles, l'addition d'hydroxyde de calcium, ou de chaux éteinte, pour débicarbonater des boues contaminées par du dioxyde de carbone.

La teneur en sels est fonction des roches traversées et des eaux disponibles sur le site d'exploitation et l'on peut effectuer les opérations en présence de fluides saturés en sels.

Bien évidemment, le fluide de forage peut comprendre des additifs habituels de la classe des polysaccharides de haut poids moléculaire, comme le succinoglycane, le wellan, le gellan, utiles en tant que viscosants.

D'autres additifs classiques pour des applications concernant l'exploitation de gisements de pétrole et/ou de gaz peuvent entrer dans la composition du fluide. Ainsi, on peut mentionner les agents de transfert de radicaux libres, comme les alcools inférieurs, les thiourées, l'hydroquinone ; les biocides, les agents chélatants, les tensioactifs, des anti-mousses, des agents anti-corrosion par exemple.

D'autres détails ou avantages de l'invention apparaîtront plus clairement au vu des exemples ci-dessous, sans caractère limitatif.

D'autres détails ou avantages de l'invention pourront apparaître au vu des exemples qui suivent, sans caractère limitatif.

## EXEMPLES

**Exemple 1:** poly(SPP/méthacrylate de lauryle) 97/3 mol/mol

La synthèse se déroule en deux étapes: préparation d'un mélange aqueux comprenant les monomères puis copolymérisation.

Préparation d'un mélange aqueux comprenant les monomères:

Dans un bêcher verré de 1 litre sous agitation magnétique sont ajoutés 4,3g de méthacrylate de lauryle, 81,8g d'une solution de dodécylsulfate de sodium ("SDS") à 30%, 461,6g d'eau et 9,9g de sulfate de sodium. L'agitation est maintenue jusqu'à obtention d'une solution micellaire limpide (Mélange 1 - fluide aqueux B). Dans un bêcher verré de 500ml sous agitation magnétique sont ajoutés 161,2g de SPP et 161,2g d'eau. L'agitation est maintenue jusqu'à obtention d'une solution limpide (Mélange 2 - solution aqueuse A). Le mélange 2 est ensuite introduit dans le mélange 1 sous agitation magnétique. L'agitation est maintenue jusqu'à obtention d'une solution micellaire limpide (Mélange 3). Toutes ces étapes de mélange se déroulent à température ambiante.
Volume total = 1L
n Méthacrylate de lauryle = 0,017 mol
n SDS = 0,085 mol
n SDS - cmc SDS= 0,085-0,007x1=0,078 mol
$n_H$ =13,5

Copolymérisation:

Dans un réacteur verré ayant une double enveloppe de 1litre équipé d'une agitation mécanique, d'un réfrigérant et d'une régulation de température par un bain chauffant sont ajoutés 100g d'eau. Sous balayage d'azote la température du milieu réactionnel est portée à 80°C. A 80°C sont alors ajoutés simultanément le mélange 3 sur 3h et une solution de 0,77g de dihydrochlorure 2,2'-azobis (2-methylpropionamidine) dans 10g d'eau sur 4h15. A la fin de ces additions est ajoutée une solution de 0,46g de dihydrochlorure 2,2'-azobis (2-methylpropionamidine) dans 10g d'eau sur 3h. Le milieu réactionnel est ensuite refroidi à température ambiante.

**Exemple 2**: poly(SPP/méthacrylate de lauryle) 99/1 mol/mol

On opère comme dans l'exemple 1.

Préparation d'un mélange aqueux comprenant les monomères (mélange 3):

On met en oeuvre pour le mélange 1 :

- 1,5g de méthacrylate de lauryle,
- 54,5g d'une solution de dodécylsulfate de sodium à 30%,
- 469,6g d'eau et 9,9g de sulfate de sodium.

On met en oeuvre pour le mélange 2:

- 172,2g de SPP et 172,2g d'eau.
  Volume total = 1L
  n Méthacrylate de lauryle = 0,006 mol
  n SDS = 0,057 mol
  n SDS - cmc SDS= 0,057-0,007x1=0,050 mol
  $n_H$ = 7,4

Copolymérisation

Dans un réacteur verré ayant une double enveloppe de 1litre équipé d'une agitation mécanique, d'un réfrigérant et d'une régulation de température par un bain chauffant sont ajoutés 100g d'eau. Sous balayage d'azote la température du milieu réactionnel est portée à 80°C. A 80°C sont alors ajoutés simultanément le mélange 3 sur 3h et une solution de 0,81g de dihydrochlorure 2,2'-azobis (2-methylpropionamidine) dans 10g d'eau sur 4h15. A la fin de ces additions est ajoutée une solution de 0,48g de dihydrochlorure 2,2'-azobis (2-methylpropionamidine) dans 10g d'eau sur 3h. Le milieu réactionnel est ensuite refroidi à température ambiante.

**Exemple 3** poly(SPP/Plex6877-Opurifié)99/1mol/mol

On opère comme dans l'exemple 1.

Préparation d'un mélange aqueux comprenant les monomères (mélange 3):

On met en oeuvre pour le mélange 1:

- 9,3g de Plex6877-O purifié par élimination du méthacrylate de méthyle,
- 4,1g d'une solution de dodécylsulfate de sodium à 30%,
- 487,7g d'eau.

On met en oeuvre pour le mélange 2:

- 189,4g de SPP et 189,4g d'eau.

Copolymérisation

Dans un réacteur verré ayant une double enveloppe de 1litre équipé d'une agitation mécanique, d'un réfrigérant et d'une régulation de température par un bain chauffant sont ajoutés 100g d'eau. Sous balayage d'azote la température du milieu réactionnel est portée à 80°C. A 80°C sont alors ajoutés simultanément le mélange 3 sur 3h et une solution de 0,89g de dihydrochlorure 2,2'-azobis (2-methylpropionamidine) dans 10g d'eau sur 4h15. A la fin de ces additions est ajoutée une solution de 0,53g de dihydrochlorure 2,2'-azobis (2-methylpropionamidine) dans 10g d'eau sur 3h. Le milieu réactionnel est ensuite refroidi à température ambiante.

**Exemple 4** poly(SPP/méthacrylate de lauryle) 99/1 mol/mol préparé en présence de 2 parties en poids heptane pour 1 partie en poids de méthacrylate de lauryle

Cet exemple est substantiellement similaire à l'exemple 1 avec substitution partielle du méthacrylate de lauryle par l'heptane.
On opère comme dans l'exemple 1.

Préparation d'un mélange aqueux comprenant les monomères (mélange 3):

On met en oeuvre pour le mélange 1:

- 0,5g de méthacrylate de lauryle,
- 1g d'heptane,
- 54,5g d'une solution de dodécylsulfate de sodium à 30%,
- 469,6g d'eau,
- 9,9g de sulfate de sodium.

On met en oeuvre pour le mélange 2:

- 172,2g de SPP et 172,2g d'eau.
  Volume total = 1L
  n Méthacrylate de lauryle = 0,002 mol
  n SDS = 0,057 mol
  n SDS- cmc SDS = 0,057-0,007x1=0,050 mol
  $n_H$ = 2,5

Copolymérisation

Dans un réacteur verré ayant une double enveloppe de 1litre équipé d'une agitation mécanique, d'un réfrigérant et d'une régulation de température par un bain chauffant sont ajoutés 100g d'eau. Sous balayage d'azote la température du milieu réactionnel est portée à 80°C. A 80°C sont alors ajoutés simultanément le mélange 3 sur 3h et une solution de 0,81g de dihydrochlorure 2,2'-azobis (2-methylpropionamidine) dans 10g d'eau sur 4h15. A la fin de ces additions est ajoutée une solution de 0,48g de dihydrochlorure 2,2'-azobis (2-methylpropionamidine) dans 10g d'eau sur 3h. Le milieu réactionnel est ensuite refroidi à température ambiante.

**Exemple 5** poly(SPP/acrylamide/méthacrylate de lauryle) 29,5/67,5/3 mol/mol

On opère comme dans l'exemple 1.

Préparation d'un mélange aqueux comprenant les monomères (mélange 3):

On met en ouvre pour le mélange 1:

- 3,9g de méthacrylate de lauryle,
- 73,1g d'une solution de dodécylsulfate de sodium à 30%,
- 220,1g d'eau et 5,4g de sulfate de sodium.

On met en ouvre pour le mélange 2:

- 57g de SPP, 57g d'eau,
- 63,5g d'une solution aqueuse d'acrylamide à 50%.
  Volume total = 0,544 L
  n Méthacrylate de lauryle = 0,015 mol
  n SDS = 0,076 mol
  n SDS- cmc SDS = 0,076-0,007x0,544=0,072 mol
  nH = 12,9

Copolymérisation

Dans un réacteur verré ayant une double enveloppe de 1litre équipé d'une agitation mécanique, d'un réfrigérant et d'une régulation de température par un bain chauffant sont ajoutés 100g d'eau. Sous balayage d'azote la température du milieu réactionnel est portée à 80°C. A 80°C sont alors ajoutés simultanément le mélange 3 sur 3h et une solution de 0,9g de dihydrochlorure 2,2'-azobis (2-methylpropionamidine) dans 10g d'eau sur 4h15. A la fin de ces additions est ajoutée une solution de 0,54g de dihydrochlorure 2,2'-azobis (2-methylpropionamidine) dans 10g d'eau sur 3h. Le milieu réactionnel est ensuite refroidi à température ambiante.

**Exemple 6** - **Comparatif** - poly(SPP/méthacrylate de lauryle) 97/3 mol/mol

La synthèse se déroule en deux étapes: préparation d'un mélange aqueux comprenant les monomères puis copolymérisation.

Préparation d'un mélange aqueux comprenant les monomères:

Dans un bêcher verré de 1 litre sous agitation magnétique sont ajoutés 3g de méthacrylate de lauryle, 510g d'une solution de dodécylsulfate de sodium à 30%, 323,3g d'eau et 6,9g de sulfate de sodium. L'agitation est maintenue

jusqu'à obtention d'une solution micellaire limpide (Mélange 1 -fluide aqueux B). Dans un bêcher verré de 500ml sous agitation magnétique sont ajoutés 112,9g de SPP et 112,9g d'eau. L'agitation est maintenue jusqu'à obtention d'une solution limpide (Mélange 2 - solution aqueuse A). Le mélange 2 est ensuite introduit dans le mélange 1 sous agitation magnétique. L'agitation est maintenue jusqu'à obtention d'une solution micellaire limpide (Mélange 3). Toutes ces étapes de mélange se déroulent à température ambiante.
Volume total = 1,084L
n Méthacrylate de lauryle = 0,0118 mol
n SDS = 0,531 mol
n SDS - cmc SDS= 0,531-0,007*1,084=0,523 mol
$n_H$ =1,4

Copolymérisation:

Dans un réacteur verré ayant une double enveloppe de 1litre équipé d'une agitation mécanique, d'un réfrigérant et d'une régulation de température par un bain chauffant sont ajoutés 70g d'eau. Sous balayage d'azote la température du milieu réactionnel est portée à 80°C. A 80°C sont alors ajoutés simultanément le mélange 3 sur 3h et une solution de 0,54g de dihydrochlorure 2,2'-azobis (2-methylpropionamidine) dans 7g d'eau sur 4h15. A la fin de ces additions est ajoutée une solution de 0,32g de dihydrochlorure 2,2'-azobis (2-methylpropionamidine) dans 7g d'eau sur 3h. Le milieu réactionnel est ensuite refroidi à température ambiante.
Le produit final présente une viscosité proche de l'eau.

**Exemple 7 (Comparatif)** - poly(SPE/acrylamide/n-octylacrylamide) 5/94/1 mol/mol/mol - Préparé selon l'art antérieur

On reproduit l'exemple 1 du brevet US 4742135 (Exxon).

Dans un réacteur verré ayant une double enveloppe de 1litre équipé d'une agitation mécanique, d'un réfrigérant et d'une régulation de température par un bain chauffant sont ajoutés 470g d'eau, 12,1g d'acrylamide, 0,33g de n-octylacrylamide, 15,8g de dodécylsulfate de sodium et 2,45g de SPE.
Volume total = 0,5L
n-octylacrylamide = 0,0018 mol
n SDS = 0,055 mol
n SDS- cmc SDS = 0,055-0,007x0.5 = 0,0525 mol
$n_H$ = 2,1

Sous balayage d'azote, la température du milieu réactionnel est portée à 50°C. A 50°C sont alors ajoutés 0,01g de persulfate de potassium. Le chauffage, l'agitation et le balayage d'azote sont maintenus sur 24h. Le milieu réactionnel est ensuite refroidi à température ambiante. Le produit final est analysé par RMN et GPC. Il ne présente pas de polymère, et ne présente aucune propriété notable.

Afin de tenter d'obtenir un polymère, on poursuit alors l'essai au-delà des enseignements de l'art antérieur: Le milieu réactionnel est alors remis sous agitation et balayage d'azote. La température du milieu est portée à 75°C pendant 24h. Le produit issu ne présente toujours pas de polymère. Pour poursuivre, 0,1g de persulfate de potassium sont ajoutés dans le milieu réactionnel et la température est maintenue à 75°C sur 24h sous balayage d'azote. Le produit final a un rendement de 100% en polymère, et ne présente pas de propriété notable (la viscosité est évaluée en secouant, elle est si faible qu'il est inutile de la mesurée).

**Exemple 8 - Etude comparative du copolymère de l'exemple 1 et de l'exemple 4**

Les copolymères des exemples 1 (nH=13,5) et 4 (nH=2,5) sont comparés. Chaque copolymère est purifié dans des membranes Spectra Por©, par dialyse contre de l'eau désionisée renouvelée fréquemment pendant 2 semaines, afin d'en éliminer tout autre composé que les copolymères eux-mêmes (sels, tensioactif SDS). Le copolymère pur est ensuite obtenu sous forme de poudre par séchage dans un four à 90°C des dispersions blanchâtres obtenues en fin de dialyse à l'intérieur des membranes. Chaque copolymère est ensuite dissout dans du formamide, et des expériences de diffusion statique de la lumière donnent accès au poids moléculaire moyen en masse Mw des chaînes polymères synthétisées, grâce à la méthode des diagrammes de Zimm.

La figure 1 représente le diagramme de Zimm obtenu pour le polymère de l'exemple 1.
La figure 2 représente le diagramme de Zimm obtenu pour le polymère de l'exemple 4.

Le tableau 1 ci-après donne la gamme de concentration en poids dans laquelle les études de diffusion statique de la lumière ont été réalisées, et la mesure de poids moléculaire moyen en masse qui découle du diagramme de Zimm.

On voit que les copolymères ont sensiblement le même poids moléculaire moyen en masse Mw, malgré des $n_H$ très différents.

Tableau 1

| Référence | Fraction molaire de motifs hydrophobes | Gamme de concentrations étudiée (wt%) | Mw (Kg/mol$^{-1}$) |
|---|---|---|---|
| Exemple 1 | 3% | 0,25-0,5-1-1,5-2 | 850 ±50 |
| Exemple 4 | 1% | 0,25-0,5-1-1,5-2 | 950 ±50 |

On compare ensuite les performances rhéologiques des copolymères des exemples 1 et 4, qui ont un poids moléculaire substantiellement identique, mais des $n_H$ différents. On prépare un dispersion de chacun des deux copolymères des exemples 1 et 4 suivant la recette suivante:

- 44,5 g d'eau désionisée
- 2,92 g de chlorure de sodium NaCl
- 2,50 g de copolymère purifié sec
- 0,10 g de sodium dodécylsulfate (SDS)

ce qui correspond à une concentration en sel de 1 mol/L et une concentration en poids de copolymère de 5%.

Les solutions sont agitées avec un barreau aimanté, placées sur un agitateur magnétique pendant 24 heures avant que leur viscosité sur une gamme de gradients de cisaillement donnée, soit mesurée à l'aide d'un rhéomètre AR2000 (TA Instrument, Surrey, Grande-Bretagne), équipé d'une géométrie de type cône plan (Rayon=60 mm ; angle entre plan et cône a=2; entrefer = 54 μm; type de substrat: acier). Le Tableau 2 donne les valeurs de viscosité à différents gradients de cisaillement.

Le copolymère de l'exemple 1 de haut $n_H$(=13,5) présente des viscosités allant de plusieurs centaines à plusieurs milliers de fois la viscosité de l'eau pure (1 cP); il est donc qualifié de visqueux.

Le copolymère de l'exemple 4 de bas $n_H$(=2,5) présente des viscosités de l'ordre d'une dizaine de cP et est donc qualifié de liquide.

Tableau 2

| Référence | Gradient de cisaillement (s$^{-1}$) | Viscosité (cP) |
|---|---|---|
| Exemple 1 | 5 | 8000 |
| | 10 | 4000 |
| | 30 | 1600 |
| | 50 | 800 |
| Exemple 4 | 5 | 10 |
| | 10 | 10 |
| | 30 | 10 |
| | 50 | 10 |

**Exemple 9 - Tests et utilisation**

Les polymères dont les synthèses sont décrites dans les exemples 1; 3 et 5 sont utilisés dans différentes saumures de composition suivante:

- NaBr (44.6%): densité 1,5 (référencée NaBr)
- CaCl2 (23%) + CaBr2 (33%): densité 1,7 (référencée CaCl2/CaBr2)
- CaBr2 (23%) +ZnBr2 (53%): densité 2,3 (référencée CaBr2/ZnBr2)

Les viscosités des solutions de polymères dans les saumures sont mesurées à un gradient de 100s$^{-1}$, à l'aide d'un rhéomètre AR2000 (TA Instrument, Surrey, Grande-Bretagne), équipé d'une géométrie de type couette (Rayon

intérieur=14 mm ; rayon extérieur= 15mm et hauteur= 42mm).

Le polymère de l'exemple 1 présente dans la saumure NaBr une viscosité intéressante à 25 et à 90°C, notamment à partir d'une concentration en poids de 1,5-2% ou plus (voir tableau 3).

Tableau 3

| Polymère | Concentration (%) | viscosité (25°C) | viscosité (90°C) |
|---|---|---|---|
| Exemple 1 | 1,5 | 25 | 9.8 |
| Exemple 1 | 2 | 70 | 40 |
| Exemple 1 | 3 | 210 | 130 |

Le polymère de l'exemple 3 présente dans la saumure NaBr et la saumure CaCl2/CaBr2 une viscosité intéressante à 25 et à 90°C, notamment à partir d'une concentration en poids de 1-2% ou plus (voir tableau 4).

Tableau 4

| | | NaBr | | CaCl2/CaBr2 | |
|---|---|---|---|---|---|
| Polymère | Conc. (%) | viscosité 25°C | viscosité 90°C | viscosité 25°C | viscosité 90°C |
| Exemple 3 | 1 | 15 | 3,5 | 27 | 12 |
| Exemple 3 | 2 | 79 | 31 | 82 | 31 |
| Exemple 3 | 3 | 284 | 177 | 257 | 86 |
| Exemple 3 | 5 | 617 | 551 | 875 | 395 |

Le polymère de l'exemple 5 présente dans la saumure NaBr et la saumure CaCl2/CaBr2 une viscosité intéressante dans l'application notamment à partir d'une concentration en poids de 0,5-1% ou plus. Dans la saumure CaBr2/ZnBr2 une concentration de 0,14-0,5% en poids ou plus permet déjà d'obtenir une viscosité satisfaisante (voir tableau 5).

Tableau 5

| | | NaBr | CaCl2/CaBr2 | CaBr2/ZnBr2 |
|---|---|---|---|---|
| Polymère | Conc. (%) | Visco. ($100s^{-1}$ 25°C) (cP) | Visco. ($100s^{-1}$ 25°C) (cP) | Visco. ($100s^{-1}$ 25°C) (cP) |
| Exemple 5 | 0.07 | / | / | 30.3 |
| Exemple 5 | 0,14 | 3,2 | 9,5 | 38 |
| Exemple 5 | 0,28 | 5,2 | 14.3 | 61 |
| Exemple 5 | 0,56 | 15,3 | 40 | 173 |
| Exemple 5 | 1 | 119 | 304 | 998 |

L'introduction du polymère de l'exemple 5 dans une saumure permet de ralentir la sédimentation de particules donc d'améliorer leur transport.

Les résultats présentés dans le tableau 6 ci-dessous sont réalisés avec une suspension contenant 20% en volume de particules de sable (fourni par Sifraco, référence BB 0,8/1,8) de densité 2,65 et de diamètre moyen de 1,2mm dans une saumure CaCl2/CaBr2 de densité 1,7.

Tableau 6

| Polymère | concentration en polymère (%massique) | vitesse de sédimentation (cm/mn) |
|---|---|---|
| Exemple 5 | 0 | 187 |
| Exemple 5 | 0,13 | 142 |
| Exemple 5 | 0,26 | 102 |

(suite)

| Polymère | concentration en polymère (%massique) | vitesse de sédimentation (cm/mn) |
|---|---|---|
| Exemple 5 | 0,37 | 82 |
| Exemple 5 | 0,48 | 62 |
| Exemple 5 | 0,65 | 30 |
| Exemple 5 | 0,81 | 16 |
| Exemple 5 | 0,90 | 8 |
| | 1,00 | 2 |

**Exemple 10 - Evaluation de la viscosité en régime dynamique - Mesure de G' et de G"**

Le copolymère de l'exemple 1 ($n_H$=13.5) est étudié dans différentes conditions de salinité. On prépare des formulations de ce copolymère suivant les recettes appelées recettes 3, 4 et 5 ci-dessous:

**Recette 3**

- 57,4 g d'eau désionisée
- 2,50 g de copolymère purifié sec
- 0,10 g de sodium dodécylsulfate (SDS)

Cette recette correspond à une concentration en sel de $c_{NaCl}$ = 0 mol/L et une concentration en poids de copolymère de 5%.

**Recette 4**

- 41,5 g d'eau désionisée
- 5,86 g de chlorure de sodium NaCl
- 2,50 g de copolymère purifié sec
- 0,10 g de sodium dodécylsulfate (SDS)

Cette recette correspond à une concentration en sel de $c_{NaCl}$ = 2 mol/L et une concentration en poids de copolymère de 5%.

**Recette 5**

- 38,6 g d'eau désionisée
- 8,76 g de chlorure de sodium NaCl
- 2,50 g de copolymère purifié sec
- 0,10 g de sodium dodécylsulfate (SDS)

Cette recette correspond à une concentration en sel de $c_{NaCl}$ = 3 mol/L et une concentration en poids de copolymère de 5%.

Les solutions sont agitées avec un barreau aimanté, placées sur un agitateur magnétique pendant 24 heures avant que leurs modules élastiques (G') et modules de de perte (G") soient mesurés à l'aide d'un rhéomètre AR2000 (TA Instrument, Surrey, Grande-Bretagne), équipé d'une géométrie de type cône plan (Rayon=60 mm ; angle entre plan et cône $\alpha$=2 ° ; entrefer = 54 $\mu$m; type de substrat acier), en fonction de la déformation ("%strain") à une fréquence fixée à 1 Hz à 25°C.

Les figures 3, 4 et 5 ci-après montrent respectivement les courbes G', G" (en Pa.s) en fonction de la déformation ("%strain") pour les dispersions correspondant aux 3 recettes: recette 3, 4 et 5.

Les formulations selon les 3 recettes sont des gels: le module élastique G' est constant, supérieur au module de perte G" sur une gamme de déformation relativement large, allant jusqu'à 10 à 100%. Par ailleurs, plus le taux de sel est important, plus le module élastique est grand à une concentration en copolymère constante :

- pour $c_{NaCl}$ = 0 mol/L (recette 1), G' est d'environ 10 Pa.s
- pour $c_{NaCl}$ = 2 mol/L (recette 2), G' est d'environ 50 Pa.s
- pour $c_{NaCl}$ = 3 mol/L (recette 3), G' est d'environ 100 Pa.s

## Revendications

**1.** Procédé de préparation d'un copolymère comprenant:

- des unités $A_Z$ comprenant un groupe bétaïne, le groupe bétaïne comprenant un groupe cationique et un groupe anionique, et éventuellement d'autres unités hydrophiles $A_{autre}$, et
- au moins un groupement B d'unités B hydrophobes ($B_{phobe}$) et/ou amphiphiles ($B_{amhi}$), ledit procédé comprenant les étapes suivantes:

a) on prépare un fluide aqueux B

- le fluide aqueux B comprenant:

  - au moins un monomère B éthylèniquement insaturé, hydrophobe ($B_{phobe}$) et/ou amphiphile ($B_{amphi}$), et
  - éventuellement un tensioactif,
  - à la condition que si le monomère B est un monomère hydrophobe $B_{phobe}$, alors le fluide aqueux B comprend un tensioactif,

- le monomère B étant compris dans des micelles de tensioactif et/ou de monomère amphiphile $B_{amphi}$
- avec au moins une des conditions suivantes:

  - le nombre $n_H$ de monomères dans les micelles est supérieur à 2,6, de préférence supérieur ou égal à 3, de préférence supérieur ou égal à 5, de préférence supérieur ou égal à 10, et/ou
  - le rapport en moles entre le tensioactif, et le monomère B est inférieur ou égal à 28, de préférence inférieur ou égal à 20, de préférence inférieur ou égal à 15, de préférence inférieur ou égal à 10, de préférence inférieur ou égal à 7, et/ou
  - le rapport en poids entre le tensioactif, s'il est présent, et le monomère B est inférieur ou égal à 30, de préférence inférieur ou égal à 20, de préférence inférieur ou égal à 15, de préférence inférieur ou égal à 10, de préférence inférieur ou égal à 7,

b) on polymérise par mise en présence en milieu aqueux:

- des micelles du fluide aqueux B,
- de monomères $A_Z$ ou $A_Z$ précurseur et éventuellement d'autres monomères hydrophiles $A_{autre}$ ces monomères étant en solution dans le milieu aqueux, les monomères $A_Z$ étant des monomères comprenant un groupe bétaïne, les monomères $A_Z$ précurseur étant des monomères comprenant un groupe susceptible d'être utilisé pour former des groupes bétaïne $A_Z$ par une réaction subséquente à la polymérisation, et
- d'une source de radicaux libres, et

c) éventuellement, si des monomères $A_Z$ précurseur ont été mis en oeuvre lors de l'étape b), on fait réagir les unités dérivant de ces monomères de manière à former des groupes bétaïne $A_Z$.

**2.** Procédé selon la revendication 1, **caractérisé en ce que** le rapport en moles entre l'ensemble des monomères $A_Z$, ou $A_Z$ précurseur, et des éventuels monomères $A_{autre}$ et les monomères B est compris entre 1/99 et 99,9/0,1, de préférence entre 80/20 et 99/1.

**3.** Procédé selon l'une des revendications 1 ou 2, **caractérisé en ce que**:

- on met en oeuvre des monomères hydrophiles $A_{autre}$,
- le rapport en moles entre les monomères $A_Z$, ou $A_Z$ précurseur, et le total des monomères $A_{autres}$ est compris entre 99/1 et 1/99.

**4.** Procédé selon l'une des revendications 1 à 3, **caractérisé en ce que** le monomère bétaïne $A_Z$ est sélectionné dans le groupe constitué des monomères suivants:

- les alkylsulfonates ou phosphonates de dialkylammonium alkyl acrylates ou méthacrylates, acrylamido ou méthacrylamido, de préférence

  - le sulfopropyl diméthyl ammonium éthyl méthacrylate
  - le sulfoéthyl diméthyl ammonium éthyl méthacrylate
  - le sulfobutyl diméthyl ammonium éthyl méthacrylate
  - le sulfohydroxypropyl diméthyl ammonium éthyl méthacrylate
  - le sulfopropyl diméthylammonium propyl acrylamide
  - le sulfopropyl diméthylammonium propyl méthacrylamide
  - le sulfopropyl diéthyl ammonium éthyl méthacrylate
  - le sulfohydroxypropyl diméthyl ammonium propyl méthacrylamido
  - le sulfohydroxypropyl diéthyl ammonium éthyl méthacrylate

- les monomères bétaïnes hétérocycliques, de préférence :

  - les sulfobétaines dérivées de la pipérazine
  - les sulfobétaines dérivées des 2-vinylpyridine et 4-vinylpyridine, tout particulièrement la 2-vinyl (3-sulfopropyl) pyridinium bétaïne, la 4-vinyl (3-sulfopropyl) pyridinium bétaïne
  - la 1-vinyl-3-(3-sulfopropyl) imidazolium bétaïne

- les alkylsulfonates ou phosphonates de dialkylammonium alkyl allyliques, de préférence la sulfopropyl méthyl diallyl ammonium bétaine
- les alkylsulfonates ou phosphonates de dialkylammonium alkyl styréniques
- les bétaïnes issues de diènes et d'anhydrides éthyléniquement insaturés
- les phosphobétaines de formules

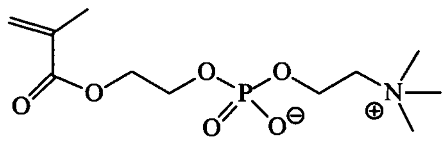

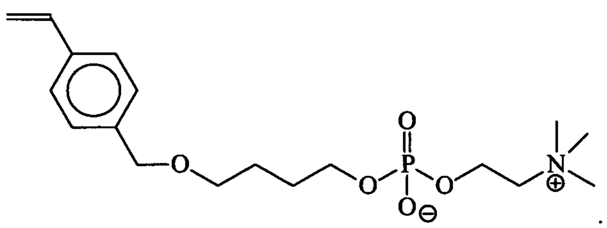

**5.** Procédé selon l'une des revendications 1 à 4, **caractérisé en ce que** le monomère bétaïne $A_Z$ présente l'une des

formules suivantes:

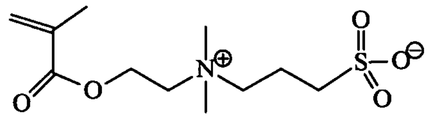

(SPE)

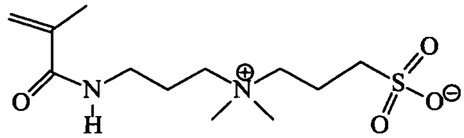

(SPP)

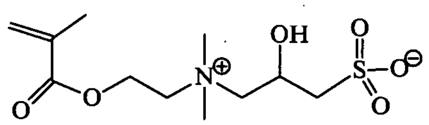

(SHPE)

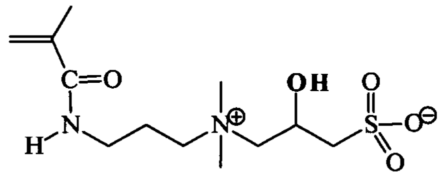

(SHPP)

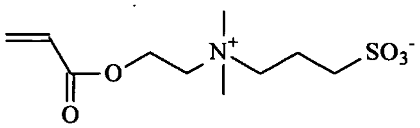

(SPDA).

**6.** Procédé selon l'une des revendications 1 à 5, **caractérisé en ce que** qu'on met en oeuvre d'autres monomèrees hydrophiles $A_{autre}$, choisis parmi:

- des monomères $A_N$ neutres,
- des monomères $A_C$ cationiques ou potentiellement cationiques,
- des monomères AA anioniques ou potentiellement anioniques,
- des mélanges ou associations de telles unités.

**7.** Procédé selon la revendication 6, **caractérisé en ce que** les monomères $A_N$ sont choisis parmi les suivants:

- les hydroxyalkylesters d'acides α-β éthyléniquement insaturés,
- les amides α-β éthyléniquement insaturés,
- les monomères α-β éthyléniquement insaturés portant un segment polyoxyalkyléné hydrosoluble,
- l'alcool vinylique,
- les vinyl-lactames,
- les monomères α-β éthyléniquement insaturés uréido,
- leurs mélanges ou associations.

**8.** Procédé selon la revendication 7, **caractérisé en ce que** les monomères $A_N$ sont choisis parmi les suivants:

- les acrylates et méthacrylates d'hydroxyéthyle ou d'hydroxypropyle, le glycérol monométhacrylate,
- l'acrylamide (AM), le méthacrylamide, le N-méthylolacrylamide, le diméthylacylamide, le diméthylméthacrylamide,
- la vinylpyrrolidone,
- le méthacrylamido de 2-imidazolidinone éthyle,
- leurs mélanges ou associations.

**9.** Procédé selon la revendication 8, **caractérisé en ce que** les monomères $A_A$ sont choisis parmi les suivants:

- des monomères possédant au moins une fonction carboxylique, comme les acides carboxyliques α-β éthyléniquement insaturés ou les anhydrides correspondants, et leurs sels hydrosolubles,
- des monomères possédant au moins une fonction sulfate ou sulfonate ou une fonction acide correspondante,
- des monomères possédant au moins une fonction phosphonate ou phosphate ou une fonction acide correspondante.

**10.** Procédé selon la revendication 9, **caractérisé en ce que** les monomères $A_A$ sont choisis parmi les suivants:

- les acides ou anhydrides acrylique, méthacrylique, maleique, l'acide fumarique, l'acide itaconique, le N-méthacroyl alanine, le N-acryloylglycine et leurs sels hydrosolubles,
- le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle , l'acrylate ou le méthacrylate de sulfopropyle et leurs sels hydrosolubles,
- l'acide vinylphosphonique, les esters de phosphates éthyléniquement insaturés.

**11.** Procédé selon l'une des revendications 1 à 10, **caractérisé en ce que** les monomères hydrophobes $B_{phobe}$ sont choisis parmi:

- les monomères vinylaromatiques,
- les halogénures de vinyle ou de vinylidène,
- les $C_1$-$C_{30}$ alkylesters d'acides α-β monoéthyléniquement insaturés,
- les esters de vinyle ou d'alcool allylique d'acides carboxyliques,
- les nitriles α-β monoéthyléniquement insaturés contenant de 3 à 12 atomes de carbone,
- les α-oléfines,
- les diènes conjugués,
- leurs mélanges ou associations.

**12.** Procédé selon la revendication 11, **caractérisé en ce que** les monomères hydrophobes $B_{phobe}$ sont choisis parmi:

- le styrène, l'alpha-méthylstyrène, le parachlorométhylstyrène, le vinyltoluène
- le chlorure de vinyle, le chlorure de vinylidène,
- les acrylates et méthacrylates de méthyle, éthyle, butyle, 2-éthylhexyle, isoactyle, lauryle, isodécyle, ou stéaryle,
- les acétates, propionates, versatates ou stéarate de vinyle ou d'allyle,
- l'acrylonitrile, le methacrylonitrile,
- leurs mélanges ou associations.

**13.** Procédé selon l'une des revendications 1 à 12, **caractérisé en ce que** monomères amphiphiles $B_{amphi}$ sont choisis parmi:

- les acrylates ou méthacrylates d'alcool aliphatiques en $C_3$-$C_{30}$ poly(éthoxylés et/ou propoxylés), dont la partie aliphatique est le cas échéant substituée par un ou plusieurs hydroxyle(s) de préférence en bout de groupe aliphatique,
- les acrylates ou méthacrylate de polystryrylphenols poly(éthoxylés et/ou propoxylés),
- les acrylate ou méthacrylates d'alkylphenols poly(éthoxylés et/ou propoxylés).

**14.** Procédé selon l'une des revendications 1 à 13, **caractérisé en ce que**

- le fluide aqueux B comprend un tensioactif, et
- le tensioactif est un tensioactif anionique ou non ionique.

**15.** Procédé selon la revendication 14, **caractérisé en ce que en ce que** le tensioactif est un alkylsulfate, un alkylsulfonate, un alkylarylsulfate, ou un alkylarylsulfonate.

**16.** Procédé selon l'une des revendications 1 à 15, caractérisé en ce l'étape b) comprend les étapes suivantes:

b1) on prépare une solution aqueuse A comprenant les monomères $A_Z$ ou $A_Z$ précurseur, et éventuellement un sel,
b2) on met en présence, au moins une partie de la solution aqueuse A, au moins une partie du fluide aqueux B et au moins une partie de la source de radicaux libres, pour former un mélange réactionnel,
b3) on polymérise en générant des radicaux libres dans le mélange réactionnel, de préférence par chauffage,
b4) le cas échéant, on ajoute au mélange réactionnel les parties restantes de la solution aqueuse A et/ou du fluide aqueux B, et/ou de la source de radicaux libre, chacun pouvant être ajouté en une fois, ou de manière continue.

**17.** Procédé selon l'une des revendications 1 à 15, **caractérisé en ce que** l'étape b) est mise en oeuvre de manière semi-continue.

**18.** Procédé selon l'une des revendications 1 à 17, **caractérisé en ce qu'**on opère de la manière suivante:

i) on prépare le fluide aqueux B (étape a)
ii) on prépare la solution aqueuse A (étape b1)
iii) on mélange le fluide aqueux B et la solution aqueuse A pour obtenir un pré-mélange
iv) on réalise dans le réacteur un pied de cuve comprenant une partie du pré-mélange, et la source de radicaux libre, avec de préférence de l'eau
v) on initie la polymérisation en chauffant
vi) on ajoute de manière continue le reste du pré-mélange, en chauffant, de manière à poursuivre la polymérisation,

la source de radicaux libre étant introduite dans le pré-mélange (étape iii) ou séparément, en totalité ou en partie, dans le pied de cuve (étape iv), le reste étant éventuellement introduit lors de l'étape vi).

**19.** Procédé selon l'une des revendications 1 à 17, **caractérisé en ce qu'**on opère de la manière suivante:

i) on prépare le fluide aqueux B (étape a)
ii) on prépare la solution aqueuse A (étape b1)
iii) on mélange le fluide aqueux B et la solution aqueuse A pour obtenir un pré-mélange
iv) on réalise dans le réacteur un pied de cuve comprenant de l'eau, et éventuellement du tensioactif,
v) on ajoute de manière continue le pré-mélange, en chauffant, de manière à polymériser,

la source de radicaux libre étant introduite dans le pré-mélange, ou séparément, en totalité ou en partie, dans le pied de cuve (étape iv), le reste étant éventuellement introduit lors de l'étape v).

**20.** Utilisation du copolymère tel qu'obtenu par le procédé défini à l'une des revendications 1 à 19 dans une composition aqueuse comme agent de modification de la rhéologie ou comme agent épaississant.

**21.** Utilisation selon la revendication 20, **caractérisée en ce que** la composition aqueuse est une composition saline, de préférence comprenant au moins 35 g/L d'un sel, une composition à base d'eau de mer ou d'une saumure, présentante une force ionique d'au moins 0,7 mol/L, de préférence d'au moins 1 mol/L..

**22.** Utilisation selon la revendication 20 ou 21, **caractérisée en ce que** la composition aqueuse est:

- un fluide utilisé pour l'extraction de pétrole et/ou de gaz,
- un fluide utilisé dans les travaux publics pour des opérations d'excavation et/ou de creusement,
- une composition pour les soins ménagers, ou
- une composition cosmétique.

**23.** Utilisation selon la revendication 20 ou 21,, **caractérisée en ce que** la composition aqueuse est un fluide utilisé pour l'extraction de pétrole et/ou de gaz, choisi parmi:

- un fluide de forage,
- un fluide de complétion,
- un fluide de fracturation,
- un fluide de mise en place de drains de gravier,

- un fluide de production,
- un fluide de récupération assistée des hydrocarbures.

## Patentansprüche

1. Verfahren zur Herstellung eines Copolymers, umfassend:

   - Einheiten $A_Z$, umfassend eine betainische Gruppe, wobei die betainische Gruppe eine kationische Gruppe und eine anionische Gruppe umfasst, und eventuell weitere hydrophile Einheiten $A_{autre}$, und
   - mindestens eine Gruppierung B von hydrophoben B ($B_{phobe}$) und/oder amphiphilen Einheiten ($B_{amphi}$), wobei das Verfahren die folgenden Schritte umfasst:

     a) Herstellung eines wässrigen Fluids B,

     - wobei das wässrige Fluid B umfasst:

       - mindestens ein ethylenisch ungesättigtes, hydrophobes ($B_{phobe}$) und/oder amphiphiles ($B_{amphi}$) Monomer B, und
       - eventuell ein Tensid,
       - unter der Bedingung, dass, wenn das Monomer B ein hydrophobes Monomer $B_{phobe}$ ist, das wässrige Fluid B ein Tensid umfasst,

     - wobei das Monomer B in Mizellen eines Tensids und/oder eines amphiphilen Monomers $B_{amphi}$ enthalten ist,
     - unter mindestens einer der folgenden Bedingungen:

       - die Anzahl $n_H$ an Monomeren in den Mizellen ist größer als 2,6, vorzugsweise größer oder gleich 3, vorzugsweise größer oder gleich 5, vorzugsweise größer oder gleich 10, und/oder
       - das Molverhältnis zwischen dem Tensid und dem Monomer B ist kleiner oder gleich 28, vorzugsweise kleiner oder gleich 20, vorzugsweise kleiner oder gleich 15, vorzugsweise kleiner oder gleich 10, vorzugsweise kleiner oder gleich 7, und/oder
       - das Gewichtsverhältnis zwischen dem Tensid, falls vorhanden, und dem Monomer B ist kleiner oder gleich 30, vorzugsweise kleiner oder gleich 20, vorzugsweise kleiner oder gleich 15, vorzugsweise kleiner oder gleich 10, vorzugsweise kleiner oder gleich 7,

     b) Polymerisation durch Inkontaktbringen im wässrigen Medium:

     - der Mizellen des wässrigen Fluids B,
     - von Monomeren $A_Z$ oder $A_{Z\ précurseur}$ und eventuell weiteren hydrophilen Monomeren $A_{autre}$, wobei diese Monomere in dem wässrigen Medium in Lösung sind, wobei die Monomere $A_Z$ Monomere sind, umfassend eine betainische Gruppe, wobei die Monomere $A_{Z\ précurseur}$ Monomere sind, umfassend eine Gruppe, die geeignet ist, verwendet zu werden, um betainische Gruppen $A_Z$ durch eine Reaktion im Anschluss an die Polymerisation zu bilden, und
     - einer Quelle von freien Radikalen, und

     c) eventuell, wenn Monomere $A_{Z\ précurseur}$ in dem Schritt b) eingesetzt wurden, Bewirken einer Reaktion der abgeleiteten Einheiten dieser Monomere, um betainische Gruppen $A_Z$ zu bilden.

2. Verfahren nach Anspruch 1, **dadurch gekennzeichnet, dass** das Molverhältnis zwischen der Gesamtheit der Monomere $A_Z$, oder $A_{Z\ précurseur}$, und eventuellen Monomeren $A_{autre}$ und den Monomeren B zwischen 1/99 und 99,9/0,1, vorzugsweise zwischen 80/20 und 99/1, beträgt.

3. Verfahren nach einem der Ansprüche 1 oder 2, **dadurch gekennzeichnet, dass**:

   - hydrophile Monomere $A_{autre}$ eingesetzt werden,
   - das Molverhältnis zwischen den Monomeren $A_Z$, oder $A_{Z\ précurseur}$, und der Gesamtzahl der Monomere $A_{autres}$ zwischen 99/1 und 1/99 beträgt.

**4.** Verfahren nach einem der Ansprüche 1 bis 3, **dadurch gekennzeichnet, dass** das betainische Monomer $A_Z$ in der Gruppe ausgewählt ist, die von den folgenden Monomeren gebildet ist:

- den Alkylsulfonaten oder Phosphonaten von Dialkylammoniumalkyl-Akrylaten oder-Methakrylaten, vorzugsweise Akrylamid oder Methakrylamid,
    - dem Sulfopropyldimethylammoniumethyl-Methakrylat,
    - dem Sulfoethyldimethylammoniumethyl-Methakrylat,
    - dem Sulfobutyldimethylammoniumethyl-Methakrylat,
    - dem Sulfohydroxypropyldimethylammoniumethyl-Methakrylat,
    - dem Sulfopropyldimethylammoniumpropyl-Akrylamid,
    - dem Sulfopropyldimethylammoniumpropyl-Methakrylamid,
    - dem Sulfopropyldiethylammoniumethyl-Methakrylat,
    - dem Sulfohydroxypropyldimethylammoniumpropyl-Methakrylamid,
    - dem Sulfohydroxypropyldiethylammoniumethyl-Methakrylat,
- den heterozyklischen betainischen Monomeren, vorzugsweise:
    - den Sulfobetain-Derivaten des Piperazins,
    - den Sulfobetain-Derivaten von 2-Vinylpyridin und 4-Vinylpyridin, insbesondere dem 2-Vinyl(3-sulfopropyl)pyridiniumbetain, dem 4-Vinyl(3-sulfopropyl)pyridiniumbetain,
    - dem 1-Vinyl-3-(3-sulfopropyl)imidazoliumbetain,
- den Allyl-Alkylsulfonaten oder -Phosphonaten von Dialkylammoniumalkyl, vorzugsweise Sulfopropylmethyldiallylammoniumbetain,
- den Styrol-Alkylsulfonaten oder -Phosphonaten von Dialkylammoniumalkyl,
- den Betainen, die von ethylenisch ungesättigten Dienen und Anhydriden stammen,
- den Phosphobetainen folgender Formeln:

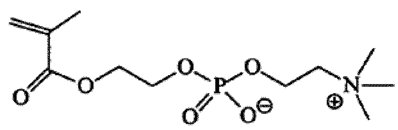

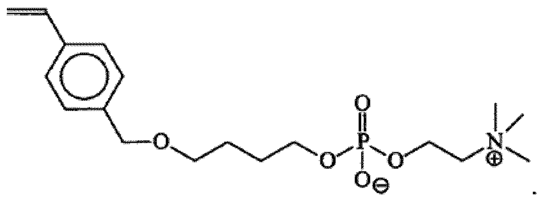

**5.** Verfahren nach einem der Ansprüche 1 bis 4, **dadurch gekennzeichnet, dass** das betainische Monomer $A_Z$ eine der folgenden Formeln aufweist:

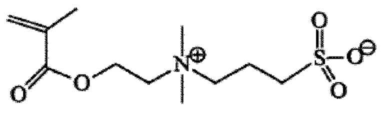

(SPE)

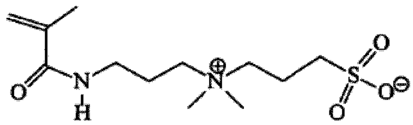

(SPP)

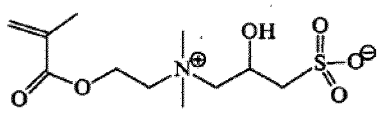

(SHPE)

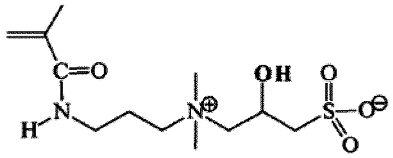

(SHPP)

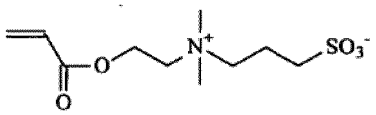

(SPDA).

**6.** Verfahren nach einem der Ansprüche 1 bis 5, **dadurch gekennzeichnet, dass** weitere hydrophile Monomere $A_{autre}$ eingesetzt werden, ausgewählt unter:

- neutralen Monomeren $A_N$,
- kationischen oder potentiell kationischen Monomeren $A_C$,
- anionischen oder potentiell anionischen Monomeren AA,
- Gemischen oder Vereinigungen solcher Einheiten.

**7.** Verfahren nach Anspruch 6, **dadurch gekennzeichnet, dass** die Monomere $A_N$ unter den folgenden ausgewählt sind:

- den Hydroxyalkylestern von $\alpha$-$\beta$ ethylenisch ungesättigten Säuren,
- den $\alpha$-$\beta$ ethylenisch ungesättigten Amiden,
- den $\alpha$-$\beta$ ethylenisch ungesättigten Monomeren, die ein wasserlösliches Polyoxyalkylen-Segment tragen,
- dem Vinylalkohol,
- den Vinyl-Laktamen,
- $\alpha$-$\beta$ ethylenisch ungesättigten Ureido-Monomeren,
- ihren Gemischen oder Vereinigungen.

**8.** Verfahren nach Anspruch 7, **dadurch gekennzeichnet, dass** die Monomere $A_N$ unter den folgenden ausgewählt sind:

- den Hydroxyethyl- oder Hydroxypropyl-Akrylaten und -Methakrylaten, dem Glycerolmonomethakrylat,
- dem Akrylamid (AM), dem Methakrylamid, dem N-Methylolakrylamid, dem Dimethylacylamid, dem Dimethylmethakrylamid,
- dem Vinylpyrrolidon,
- dem Methakrylamid von 2-Imidazolidinonethyl,
- ihren Gemischen oder Vereinigungen.

**9.** Verfahren nach Anspruch 8, **dadurch gekennzeichnet, dass** die Monomere $A_A$ unter den folgenden ausgewählt sind:

- Monomeren, die mindestens eine Karboxylfunktion besitzen, wie den $\alpha$-$\beta$ ethylenisch ungesättigten Karboxylsäuren oder den entsprechenden Anhydriden und ihren wasserlöslichen Salzen,
- Monomeren, die mindestens eine Sulfat- oder Sulfonatfunktion oder eine entsprechende Säurefunktion besitzen,
- Monomeren, die mindestens eine Phosphonat- oder Phosphatfunktion oder eine entsprechende Säurefunktion besitzen.

**10.** Verfahren nach Anspruch 9, **dadurch gekennzeichnet, dass** die Monomere $A_A$ unter den folgenden ausgewählt sind:

- den Akryl-, Methakryl-, Maleinsäuren oderanhydriden, der Fumarsäure, der Itaconsäure, dem N-Methakrylalanin, dem N-Akryloylglycin und ihren wasserlöslichen Salzen,
- dem 2-Sulfooxyethyl-Methakrylat, der Vinylbenzolsulfonsäure, der Allylsulfonsäure, der 2-Akrylamido-2-Methylpropansulfonsäure, dem Sulfoethyl-Akrylat oder -Methakrylat, dem Sulfopropyl-Akrylat oder -Methakrylat und ihren wasserlöslichen Salzen,
- der Vinylphosphonsäure, den ethylenisch ungesättigten Phosphatestern.

**11.** Verfahren nach einem der Ansprüche 1 bis 10, **dadurch gekennzeichnet, dass** die hydrophoben Monomere $B_{phobe}$ ausgewählt sind unter:

- den vinylaromatischen Monomeren,
- den Vinyl- oder Vinyliden-Halogeniden,
- den $C_1$-$C_{30}$ Alkylestern von $\alpha$-$\beta$ monoethylenisch ungesättigten Säuren,
- den Vinyl- oder Allylalkoholestern von Karboxylsäuren,
- den $\alpha$-$\beta$ monoethylenisch ungesättigten Nitrilen, die 3 bis 12 Kohlenstoffatome enthalten,
- den $\alpha$-Olefinen,
- den konjugierten Dienen,
- ihren Gemischen oder Vereinigungen.

**12.** Verfahren nach Anspruch 11, **dadurch gekennzeichnet, dass** die hydrophoben Monomere $B_{phobe}$ ausgewählt sind unter:

- dem Styrol, Alpha-Methylstyrol, Parachlormethylstyrol, Vinyltoluol,
- dem Vinylchlorid, Vinylidenchlorid,
- den Methyl-, Ethyl- Butyl-, 2-Ethylhexyl-, Isoactyl-, Lauryl-, Isodecyl- oder Stearyl-Akrylaten und -Methakrylaten,
- den Vinyl- oder Allyl-Azetaten, -Propionaten, -Versataten oder-Stearaten,
- dem Akrylnitril, Methakrylnitril,
- ihren Gemischen oder Vereinigungen.

**13.** Verfahren nach einem der Ansprüche 1 bis 12, **dadurch gekennzeichnet, dass** die amphiphilen Monomere $B_{amphi}$ ausgewählt sind unter:

- den aliphatischen $C_3$-$C_{30}$ poly(ethoxylierten und/oder -propoxylierten) Akrylaten oder Methakrylaten eines Alkohols, deren aliphatischer Teil gegebenenfalls durch ein oder mehrere Hydroxyl(e) vorzugsweise am Ende einer aliphatischen Gruppe substituiert ist,
- den poly(ethoxylierten und/oder -propoxylierten) Polystyrolphenol-Akrylaten oder -Methakrylaten,
- den poly(ethoxylierten und/oder -propoxylierten) Alkylphenol-Akrylaten oder -Methakrylaten.

**14.** Verfahren nach einem der Ansprüche 1 bis 13, **dadurch gekennzeichnet, dass**

- das wässrige Fluid B ein Tensid umfasst, und
- das Tensid ein anionisches oder nicht ionisches Tensid ist.

**15.** Verfahren nach Anspruch 14, **dadurch gekennzeichnet, dass** dass das Tensid ein Alkylsulfat, ein Alkylsulfonat, ein Alkylarylsulfat oder ein Alkylarylsulfonat ist.

**16.** Verfahren nach einem der Ansprüche 1 bis 15, **dadurch gekennzeichnet, dass** der Schritt b) die folgenden Schritte umfasst:

b1) Herstellung einer wässrigen Lösung A, umfassend die Monomere $A_Z$ oder $A_{Z\ précurseur}$ und eventuell ein Salz,
b2) Inkontaktbringen mindestens eines Teils der wässrigen Lösung A, mindestens eines Teils des wässrigen Fluids B und mindestens eines Teils der Quelle von freien Radikalen, um ein Reaktionsgemisch zu bilden,
b3) Polymerisation durch Erzeugung von freien Radikalen in dem Reaktionsgemisch, vorzugsweise durch Erhitzung,
b4) gegebenenfalls Hinzufügen der restlichen Teile der wässrigen Lösung A und/oder des wässrigen Fluids B und/oder der Quelle von freien Radikalen zu dem Reaktionsgemisch, wobei sie jeweils einmal oder kontinuierlich hinzugefügt werden können.

**17.** Verfahren nach einem der Ansprüche 1 bis 15, **dadurch gekennzeichnet, dass** der Schritt b) halb kontinuierlich eingesetzt wird.

**18.** Verfahren nach einem der Ansprüche 1 bis 17, **dadurch gekennzeichnet, dass** folgendermaßen vorgegangen wird:

i) Herstellung des wässrigen Fluids B (Schritt a))
ii) Herstellung de wässrigen Lösung A (Schritt b1))
iii) Mischen des wässrigen Fluids B und der wässrigen Lösung A, um ein Vorgemisch zu erhalten
iv) in dem Reaktor Herstellung eines Bodensatzes, umfassend einen Teil des Vorgemisches und die Quelle von freien Radikalen mit vorzugsweise Wasser
v) Initiieren der Polymerisation durch Erhitzen
vi) kontinuierliches Hinzufügen des Rests des Vorgemisches durch Erhitzen, um die Polymerisation fortzusetzen,

wobei die Quelle von freien Radikalen in das Vorgemisch eingeführt wird (Schritt iii)) oder getrennt zur Gänze oder zum Teil in den Bodensatz eingeführt wird (Schritt iv)), wobei der Rest eventuell in Schritt vi) eingeführt wird.

**19.** Verfahren nach einem der Ansprüche 1 bis 17, **dadurch gekennzeichnet, dass** folgendermaßen vorgegangen wird:

i) Herstellung des wässrigen Fluids B (Schritt a))
ii) Herstellung de wässrigen Lösung A (Schritt b1))
iii) Mischen des wässrigen Fluids B und der wässrigen Lösung A, um ein Vorgemisch zu erhalten
iv) in dem Reaktor Herstellung eines Bodensatzes, umfassend Wasser und eventuell ein Tensid,
v) kontinuierliches Hinzufügen des Vorgemisches durch Erhitzen, um zu polymerisieren,

wobei die Quelle von freien Radikalen in das Vorgemisch eingeführt wird oder getrennt zur Gänze oder zum Teil in den Bodensatz eingeführt wird (Schritt iv)), wobei der Rest eventuell in Schritt v) eingeführt wird.

**20.** Verwendung des Copolymers, wie durch das in einem der Ansprüche 1 bis 19 definierte Verfahren erhalten, in einer wässrigen Zusammensetzung als ein die Rheologie modifizierendes Mittel oder als Verdickungsmittel.

**21.** Verwendung nach Anspruch 20, **dadurch gekennzeichnet, dass** die wässrige Zusammensetzung eine Salzzusammensetzung ist, vorzugsweise umfassend mindestens 35 g/L eines Salzes, eine Zusammensetzung auf Basis von Meerwasser oder von Salzlake, die eine Ionenstärke von mindestens 0,7 mol/L, vorzugsweise 1 mol/L, aufweist.

**22.** Verwendung nach Anspruch 20 oder 21, **dadurch gekennzeichnet, dass** die wässrige Zusammensetzung ist:

- ein Fluid, das zur Förderung von Erdöl und/oder Gas verwendet wird,
- ein Fluid, das im Tiefbau für die Aushub- und/oder Ausgrabungsarbeiten verwendet wird,
- eine Zusammensetzung für die Haushaltspflege, oder
- eine kosmetische Zusammensetzung.

**23.** Verwendung nach Anspruch 20 oder 21, **dadurch gekennzeichnet, dass** die wässrige Zusammensetzung ein Fluid ist, das für die Förderung von Erdöl und/oder Gas verwendet wird, ausgewählt unter:

- einer Bohrflüssigkeit,
- einer Abdichtungsflüssigkeit,
- einem Brechfluid,
- einem Fluid zur Platzierung von Kiesdrains,
- einer Erzeugungsflüssigkeit,
- einem Rückgewinnungsfluid, unterstützt durch Kohlenwasserstoffe.

## Claims

**1.** Process for the preparation of a copolymer comprising:

- units $A_Z$ comprising a betaine group, the betaine group comprising a cationic group and an anionic group, and optionally other hydrophilic units $A_{other}$, and

- at least one group B of hydrophobic units B ($B_{phobic}$) and/or amphiphilic units B ($B_{amphi}$),

said process comprising the following stages:

a) an aqueous fluid B is prepared

- the aqueous fluid B comprising:

  - at least one ethylenically unsaturated monomer B which is hydrophobic ($B_{phobic}$) and/or amphiphilic ($B_{amphi}$), and
  - optionally a surfactant,
  - with the condition that, if the monomer B is a hydrophobic monomer $B_{phobic}$, then the aqueous fluid B comprises a surfactant,

- the monomer B being included in micelles of surfactant and/or of amphiphilic monomer $B_{amphi}$,
- with at least one of the following conditions:

  - the number $n_H$ of monomers in the micelles is greater than 2.6, preferably greater than or equal to 3, preferably greater than or equal to 5, preferably greater than or equal to 10, and/or
  - the of ratio in moles of the surfactant to the monomer B is less than or equal to 28, preferably less than or equal to 20, preferably less than or equal to 15, preferably less than or equal to 10, preferably less than or equal to 7, and/or
  - the ratio by weight of the surfactant, if it is present, to the monomer B is less than or equal to 30, preferably less than or equal to 20, preferably less than or equal to 15, preferably less than or equal to 10, preferably less than or equal to 7,

b) polymerization is carried out by bringing together, in an aqueous medium:

- the micelles of the aqueous fluid B,
- monomers $A_Z$ or $A_Z$ precursor and optionally other hydrophilic monomers $A_{other}$, these monomers being in solution in the aqueous medium, the monomers $A_Z$ being monomers comprising a betaine group, the monomers $A_Z$ precursor being monomers comprising a group capable of being used to form betaine groups $A_Z$ by a reaction subsequent to the polymerization, and
- a source of free radicals, and

c) optionally, if monomers $A_Z$ precursor have been employed during stage b), the units deriving from these monomers are reacted so as to form betaine groups $A_Z$.

**2.** Process according to Claim 1, **characterized in that** the molar ratio of all of the monomers $A_Z$ or $A_Z$ precursor and optional monomers $A_{other}$ to the monomers B is between 1/99 and 99.9/0.1, preferably between 80/20 and 99/1.

**3.** Process according to either of Claims 1 and 2, **characterized in that**:

- use is made of hydrophilic monomers $A_{other}$,
- the molar ratio of the monomers $A_Z$ or $A_Z$ precursor to the total of the monomers $A_{other}$ is between 99/1 and 1/99.

**4.** Process according to one of Claims 1 to 3, **characterized in that** the betaine monomer $A_Z$ is selected from the group consisting of the following monomers:

- alkylsulfonates or -phosphonates of dialkylammonioalkyl acrylates or methacrylates,
- acrylamides or -methacrylamides, preferably:

  - sulfopropyldimethylammonioethyl methacrylate
  - sulfoethyldimethylammonioethyl methacrylate
  - sulfobutyldimethylammonioethyl methacrylate
  - sulfohydroxypropyldimethylammonioethyl methacrylate
  - sulfopropyldimethylammoniopropylacrylamide
  - sulfopropyldimethylammoniopropylmethacrylamide

- sulfopropyldiethylammonioethyl methacrylate sulfohydroxypropyldimethylammoniopropylmethacrylamide
- sulfohydroxypropyldiethylammonioethyl methacrylate

- heterocyclic betaine monomers, preferably:

  - sulfobetaines derived from piperazine
  - sulfobetaines derived from 2-vinylpyridine and 4-vinylpyridine, very particularly 2-vinyl-1-(3-sulfopropyl)pyridinium betaine or 4-vinyl-1-(3-sulfopropyl)pyridinium betaine
  - 1-vinyl-3-(3-sulfopropyl)imidazolium betaine

- alkylsulfonates or -phosphonates of dialkylammonioalkylallylics, preferably sulfopropylmethyldiallylammonium betaine
- alkylsulfonates or -phosphonates of dialkylammonioalkylstyrenes
- betaines resulting from ethylenically unsaturated anhydrides and dienes
- phosphobetaines of formulae

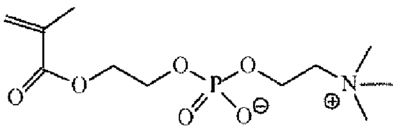

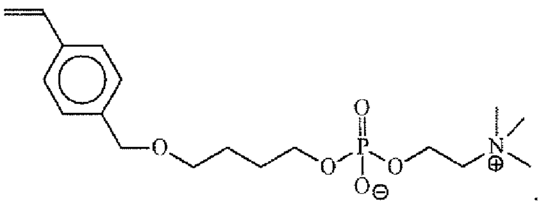

5. Process according to one of Claims 1 to 4, **characterized in that** the betaine monomer $A_Z$ exhibits one of the following formulae:

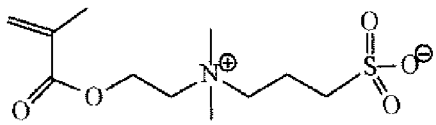

(SPE)

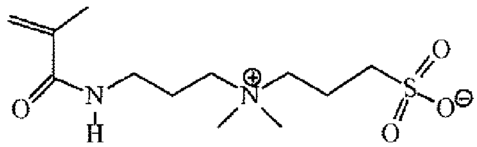

(SPP)

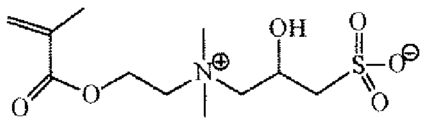

(SHPE)

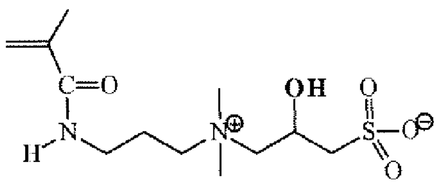

(SHPP)

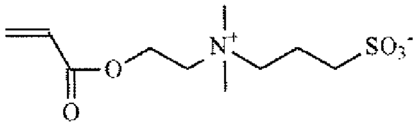

(SPDA).

**6.** Process according to one of Claims 1 to 5, **characterized in that** use is made of other hydrophilic monomers $A_{other}$ chosen from:

- neutral monomers $A_N$,
- cationic or potentially cationic monomers $A_C$,
- anionic or potentially anionic monomers $A_A$,
- mixtures or combinations of such units.

**7.** Process according to Claim 6, **characterized in that** the monomers $A_N$ are chosen from the following:

- hydroxyalkyl esters of α,β-ethylenically unsaturated acids,
- α,β-ethylenically unsaturated amides,
- α,β-ethylenically unsaturated monomers carrying a water-soluble polyoxyalkylene segment,
- vinyl alcohol,
- vinyllactams,
- α,β-ethylenically unsaturated ureido monomers,
- their mixtures or combinations.

**8.** Process according to Claim 7, **characterized in that** the monomers $A_N$ are chosen from the following:

- hydroxyethyl acrylate, hydroxyethyl methacrylate, hydroxypropyl acrylate, hydroxypropyl methacrylate or glycerol monomethacrylate,
- acrylamide (AM), methacrylamide, N-methylolacrylamide, dimethylacrylamide or dimethylmethacrylamide,
- vinylpyrrolidone,
- the methacrylamido of 2-imidazolidinone ethyl,
- their mixtures or combinations.

**9.** Process according to Claim 8, **characterized in that** the monomers $A_A$ are chosen from the following:

- monomers having at least one carboxyl functional group, such as α,β-ethylenically unsaturated carboxylic acids or the corresponding anhydrides, and their water-soluble salts,
- monomers having at least one sulfate or sulfonate functional group or a corresponding acid functional group,
- monomers having at least one phosphonate or phosphate functional group or a corresponding acid functional group.

**10.** The process according to Claim 9, **characterized in that** the monomers $A_A$ are chosen from the following:

- acrylic acid, acrylic anhydride, methacrylic acid, methacrylic anhydride, maleic acid, maleic anhydride, fumaric acid, itaconic acid, N-methacryloylalanine, N-acryloylglycine and their water-soluble salts,
- 2-sulfooxyethyl methacrylate, vinylbenzenesulfonic acid, allylsulfonic acid, 2-acrylamido-2-methylpropanesulfonic acid, sulfoethyl acrylate or methacrylate, sulfopropyl acrylate or methacrylate, and their water-soluble salts,
- vinylphosphonic acid or ethylenically unsaturated phosphate esters.

**11.** Process according to one of Claims 1 to 10, **characterized in that** the hydrophobic monomers $B_{phobic}$ are chosen from:

- vinylaromatic monomers,
- vinyl or vinylidene halides,
- $C_1$-$C_{30}$ alkyl esters of α,β-monoethylenically unsaturated acids,
- vinyl or allyl esters of carboxylic acids,
- α,β-monoethylenically unsaturated nitriles comprising from 3 to 12 carbon atoms,
- α-olefins,

- conjugated dienes,
- their mixtures or combinations.

**12.** Process according to Claim 11, **characterized in that** the hydrophobic monomers $B_{phobic}$ are chosen from:

- styrene, α-methylstyrene, para-chloromethylstyrene or vinyltoluene,
- vinyl chloride or vinylidene chloride,
- methyl acrylate, ethyl acrylate, butyl acrylate, 2-ethylhexyl acrylate, isooctyl acrylate, lauryl acrylate, isodecyl acrylate, stearyl acrylate, methyl methacrylate, ethyl methacrylate, butyl methacrylate, 2-ethylhexyl methacrylate, isooctyl methacrylate, lauryl methacrylate, isodecyl methacrylate or stearyl methacrylate,
- vinyl acetate, allyl acetate, vinyl propionate, allyl propionate, vinyl versatate, allyl versatate, vinyl stearate or allyl stearate,
- acrylonitrile or methacrylonitrile,
- their mixtures or combinations.

**13.** Process according to one of Claims 1 to 12, **characterized in that** the amphiphilic monomers $B_{amphi}$ are chosen from:

- acrylates or methacrylates of poly(ethoxylated and/or propoxylated) $C_3$-$C_{30}$ aliphatic alcohols, the aliphatic part of which is, if appropriate, substituted by one or more hydroxyl(s), preferably at the end of the aliphatic group,
- acrylates or methacrylates of poly(ethoxylated and/or propoxylated) polystyrylphenols,
- acrylates or methacrylates of poly(ethoxylated and/or propoxylated) alkylphenols.

**14.** Process according to one of Claims 1 to 13, **characterized in that**:

- the aqueous fluid B comprises a surfactant, and
- the surfactant is an anionic or nonionic surfactant.

**15.** Process according to Claim 14, **characterized in that in that** the surfactant is an alkyl sulfate, an alkylsulfonate, an alkylaryl sulfate or an alkylarylsulfonate.

**16.** Process according to one of Claims 1 to 15, **characterized in that** stage b) comprises the following stages:

b1) an aqueous solution A comprising the monomers $A_Z$ or $A_Z$ precursor and optionally a salt is prepared,
b2) at least a portion of the aqueous solution A, at least a portion of the aqueous fluid B and at least a portion of the source of free radicals are brought together, in order to form a reaction mixture,
b3) polymerization is carried out by generating free radicals in the reaction mixture, preferably by heating,
b4) if appropriate, the remaining portions of the aqueous solution A and/or of the aqueous fluid B and/or of the source of free radicals are added to the reaction mixture, it being possible for each to be added all at once or continuously.

**17.** Process according to one of Claims 1 to 15, **characterized in that** stage b) is carried out semibatchwise.

**18.** Process according to one of Claims 1 to 17, **characterized in that** it is carried out in the following way:

i) the aqueous fluid B is prepared (stage a)
ii) the aqueous solution A is prepared (stage b1)
iii) the aqueous fluid B and the aqueous solution A are mixed in order to obtain a premix
iv) a vessel heel comprising a portion of the premix and the source of free radicals is prepared in the reactor, preferably with water
v) the polymerization is initiated by heating
vi) the remainder of the premix is continuously added, while heating, so as to continue the polymerization,

the source of free radicals being introduced into the premix (stage iii) or separately, in all or in part, into the vessel heel (stage iv), the remainder being optionally introduced during stage vi).

**19.** Process according to one of Claims 1 to 17, **characterized in that** the operation is carried out in the following way:

i) the aqueous fluid B is prepared (stage a)

ii) the aqueous solution A is prepared (stage b1)
iii) the aqueous fluid B and the aqueous solution A are mixed in order to obtain a premix
iv) a vessel heel comprising water and optionally surfactant is prepared in the reactor
v) the premix is added continuously, while heating, so as to be polymerized,

the source of free radicals being introduced into the premix or separately, in all or in part, into the vessel heel (stage iv), the remainder being optionally introduced during stage v).

**20.** Use of the copolymer as obtained by the process defined in one of Claims 1 to 19 in an aqueous composition or as agent for modifying the rheology as thickening agent.

**21.** Use according to Claim 20, **characterized in that** the aqueous composition is a saline composition, preferably comprising at least 35 g/l of a salt, a composition based on seawater or on a brine exhibiting an ionic strength of at least 0.7 mol/l, preferably of at least 1 mol/l.

**22.** Use according to Claim 20 or 21, **characterized in that** the aqueous composition is:

- a fluid used for the extraction of oil and/or gas,
- a fluid used in civil engineering for excavation and/or digging operations,
- a household care composition, or
- a cosmetic composition.

**23.** Use according to Claim 20 or 21, **characterized in that** the aqueous composition is a fluid used for the extraction of oil and/or gas chosen from:

- a drilling fluid,
- a completion fluid,
- a fracturing fluid,
- a gravel packing fluid,
- a production fluid,
- an enhanced oil recovery fluid.

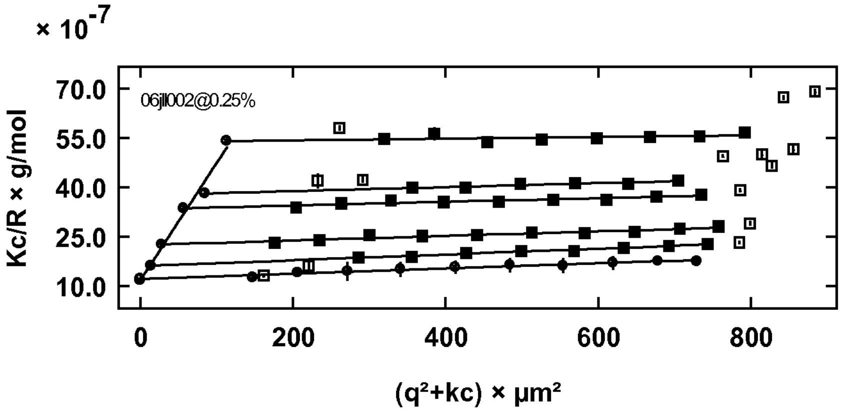


Figure 1

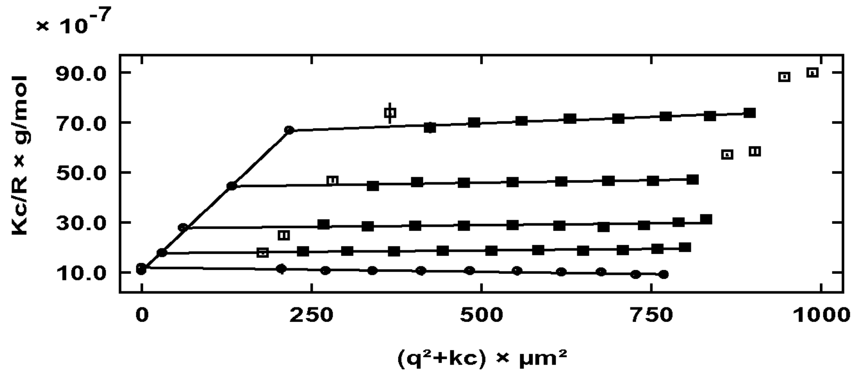


Figure 2

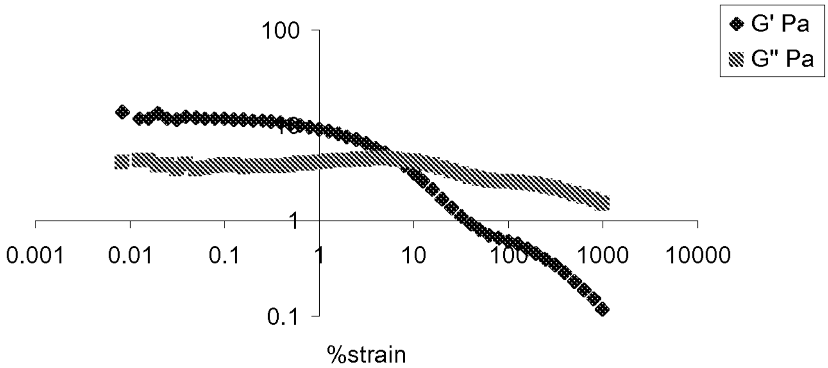


Figure 3

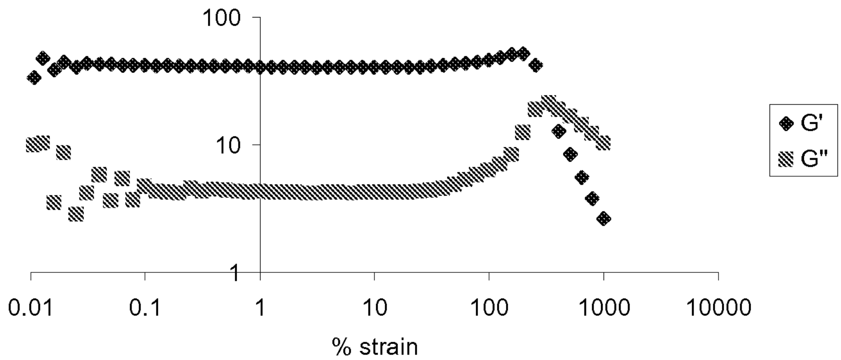


Figure 4

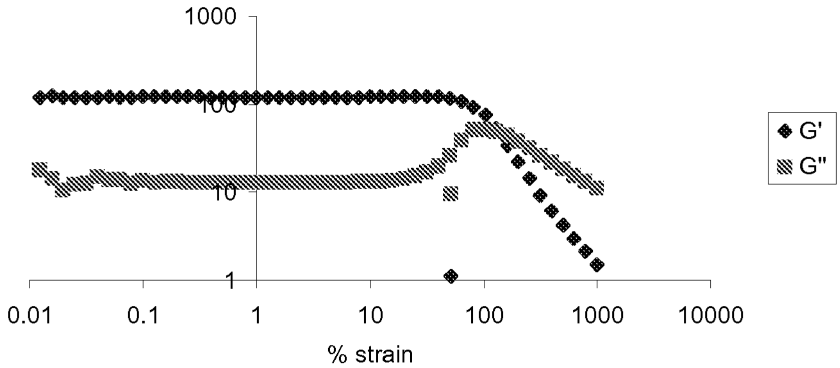


Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6346588 B
- US 4742135 A
- US 4650848 A
- US 4882405 A
- US 4788247 A
- US 4607076 A
- US 5153289 A
- US 4585846 A
- US 4822847 A
- US 4708998 A
- US 6284854 B
- US 4831092 A
- US 4835234 A
- EP 1250360 A
- US 417268 A
- WO 9903895 A
- WO 2005070979 A
- EP 0370338 A
- EP 810239 B1
- JP 11349826 A
- US 5439317 A
- US 5551516 A


### Littérature non-brevet citée dans la description


- **M. JOHNSON et al.** Hydrophobically modified acrylamide-based polybetaines. I. Synthesis, Characterization and Stimuli-Responsive Solution behavior. *Journal of Applied Polymer Science,* 2004, vol. 92 (1), 647-657
- **P. KUIAWA ; J. M. ROSIAK ; J. SELB ; F. CANDAU.** *Macromolecular Chem. & Physics,* 2001, vol. 202 (8), 1384-1397
- **P. BECHER.** *J. Colloid Sci.,* 1961, vol. 16, 49
- Sulfobetaine Zwitterionomers based on n-butyl acrylate and 2-Ethoxyethyl acrylate : monomer synthesis and copolymerization behavio. *Journal of Polymer Science,* 2002, vol. 40, 511-523
- **WEN-FU LEE ; CHAN-CHANG TSAI.** Synthesis and solubility of the poly(sulfobetaine)s and the corresponding cationic polymers: 1. Synthesis and characterization of sulfobetaines and the corresponding cationic monomers by nuclear magnetic resonance spectra. *Polymer,* 1994, vol. 35 (10), 2210-2217
- **V. M. MONROY SOTO ; J. C. GALIN.** Poly(sulphopropylbetaines) : 1. Synthesis and characterization. *Polymer,* 1984, vol. 25, 121-128
- **P. KOBERLE ; A. LASCHEWSKY.** Hydrophobically Modified Zwitterionic Polymers : Synthesis, Bulk Properties, and Miscibility with Inorganic Salts. *Macromolecules,* 1994, vol. 27, 2165-2173
- **V. M. CASTAÑO ; A. E. GONZÀLEZ ; J. CARDOSO ; O. MANERO ; V. M. MONROY.** Evidence of ionic aggregates in some ampholytic polymers by transmission electron microscopy. *J. Mater. Res.,* 1990, vol. 5 (3), 654-657
- **J. C. SALAMONE ; W. VOLKSON ; A.P. OISON ; S.C. ISRAEL.** Aqueous solution properties of a poly(vinyl imidazolium sulphobetaine). *Polymer,* 1978, vol. 19, 1157-1162
- **FAVRESSE, PHILIPPE ; LASCHEWSKY, ANDRE.** New poly(carbobetaine)s made from zwitterionic diallylammonium monomers. *Macromolecular Chemistry and Physics,* 1999, vol. 200 (4), 887-895
- **P. KOBERLE ; A. LASCHEWSKY.** Hydrophobically Modified Zwitterionic Polymers: Synthesis, Bulk Properties, and Miscibility with Inorganic Salts. *Macromolecules,* 1994, vol. 27, 2165-2173
- **I.V. BERLINOVA ; I.V. DIMITROV ; R.G. KALINOVA ; N.G. VLADIMIROV.** Synthesis and aqueous solution behaviour of copolymers containing sulfobetaine moieties in side chains. *Polymer,* 2000, vol. 41, 831-837
- **WEN-FU LEE ; CHUN-HSIUNG LEE.** Poly(sulfobetaine)s and corresponding cationic polymers: 3. Synthesis and dilute aqueous solution properties of poly(sulfobetaine)s derived from styrene-maleic anhydride). *Polymer,* 1997, vol. 38 (4), 971-979
- **LEE, WEN-FU ; CHEN, YAN-MING.** Poly(sulfobetaine)s and corresponding cationic polymers. VIII. Synthesis and aqueous solution properties of a cationic poly(methyl iodide quaternized styrene-N,N-dimethylaminopropyl maleamidic acid) copolymer. *Journal of Applied Polymer Science,* 2001, vol. 80, 1619-1626
- **ANDREW B. LOWE ; NORMAN C. BILLINGHAM ; STEVEN P. ARMES.** Synthesis of polybetaines with narrow molecular mass distribution and controlled architecture. *Chern. Commun.,* 1996, 1555-1556

- **ANDREW B. LOWE ; NORMAN C. BILLINGHAM ; STEVEN P. ARMES.** Synthesis and Properties of Low- Polydispersity Poly(sulfopropylbetaine)s and Their Block Copolymers. *Macromolecules,* 1999, vol. 32, 2141-2146
- **T. HAMAIDE.** New polymeric phosphonato-, phosphinato- and carboxybétaïnes. *Makromolecular Chemistry,* 1986, vol. 187, 1097-1107
- Oilfield Applications. Encyclopedia of Polymer Science and Engineering. vol. 10, 328-366